# EUROPEAN PATENT APPLICATION

(11) **EP 2 801 900 A2**
(43) Date of publication of application: **12.11.2014**
(21) Application number: 14167210.5
(22) Date of filing: 06.05.2014
(51) Int. Cl.: G06F 3/0488, G06F 3/0485

(54) **Portable apparatus and method of displaying object in the same**

(30) Priority: 08.05.2013 KR 20130052125
(71) Applicant: Samsung Electronics Co., Ltd, Gyeonggi-do 443-742 (KR)
(72) Inventor: Kim, Yu-Sic, 443-742 Gyeonggi-do (KR); Seung, Jung-Ah, 443-742 Gyeonggi-do (KR)
(74) Representative: Jenkins, Richard Gavin

(57) **Abstract**

A portable apparatus and a method of displaying at least one of object of the same are provided. The portable apparatus for displaying at least one of object includes using a touch and/or a touch gesture and a method of displaying a reproduction list of the portable apparatus. A portable apparatus for displaying at least one object which is scrolled at a relative velocity in response to a direction of the touch gesture in a page including at least one application by means of the touch and/or the touch gesture is provided. A method of displaying a reproduction list of the portable apparatus is also provided.

## Description

### TECHNICAL FIELD

The present disclosure relates to a portable apparatus and a method of displaying an object in the same. For example, the present disclosure relates to a portable apparatus and a method of displaying an object in the same using a touch and/or a touch gesture.

### BACKGROUND

A portable apparatus according to the related art has provided various services and functions. Recently, the number of services and functions provided by the portable apparatus is gradually increasing. Various applications which can be executed in the portable apparatus have been developed in order to improve an effective value of the portable apparatus and to satisfy various desires of users. Accordingly, one or more applications may be installed in a portable apparatus according to the related art which has a touch screen and which, similar to a smart phone, a portable phone, a notebook PC, and a tablet PC, is portable.

When an e-book or a presentation document is scrolled by using an input means(e.g., a mouse, a mouse wheel, a keyboard, or the like), each page of the e-book or the presentation document is constantly scrolled. Further, in a case of a presentation document which has a complicated layout and a plurality of objects, the objects inserted in a page of the presentation document are simultaneously scrolled in response to a scroll of the input means.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, the present disclosure has been made to solve the above-stated problems occurring in the prior art, and an aspect of the present disclosure provides portable apparatus and a method of displaying an object in the same using a touch and/or a touch gesture.

In accordance with an aspect of the present disclosure, a method of displaying an object of a portable apparatus is provided. The method includes displaying a page including objects on a touch screen, detecting a continuous movement of a touch in the page, and displaying the objects moving at a relative velocity, in response to the continuous movement of the touch.

In accordance with an aspect of the present disclosure, the method of displaying the object of the portable apparatus further includes determining whether an object, which moves at a relative velocity, among the objects overlaps another object, which moves at a relative velocity and which neighbors the third object.

In accordance with an aspect of the present disclosure, in the method of displaying the object of the portable apparatus, when one object gradually approaches another object to overlap and stops, one object has the relative velocity substantially identical to the relative velocity of another object.

In accordance with an aspect of the present disclosure, in the method of displaying the object of the portable apparatus, when one object gradually approaches another object to overlap, one object has the relative velocity to be changed in correspondence to the relative velocity of another object.

In accordance with another aspect of the present disclosure, a portable apparatus is provided. The portable apparatus includes a touch screen configured to display a page including at least one object, and a controller configured to control the touch screen, wherein the controller detects a touch on a page displayed on the touch screen and enables the touch screen to display the at least one object moving a relative velocity in correspondence to a continuous movement of the detected touch.

In accordance with an aspect of the present disclosure, a portable apparatus and a method of displaying an object of the portable apparatus, which can display an object having a relative velocity in correspondence to a touch and/or a touch gesture, are provided.

In accordance with an aspect of the present disclosure, a portable apparatus and a method of displaying an object of the portable apparatus, which can display an object having a relative velocity in correspondence to a direction of a touch and/or a touch gesture, are provided.

In accordance with an aspect of the present disclosure, a portable apparatus and a method of displaying an object of the portable apparatus, which can determine whether an object overlaps another object in correspondence to a touch and/or a touch gesture, are provided.

In accordance with an aspect of the present disclosure, a portable apparatus and a method of displaying an object of the portable apparatus, which can change a relative velocity of an object to correspond to a relative velocity of another object to overlap in correspondence to a touch and/or a touch gesture, are provided.

In accordance with an aspect of the present disclosure, a portable apparatus and a method of displaying an object of the portable apparatus, which can control an object to have a relative velocity depending on a relative velocity of another object to overlap, in correspondence to a touch and/or a touch gesture, are provided.

In accordance with an aspect of the present disclosure, a portable apparatus and a method of displaying an object of the portable apparatus, which can provide at least one feedback of a visual feedback, an auditory feedback, and a tactile feedback in correspondence to a touch and/or a touch gesture, are provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a schematic block diagram illustrating a portable apparatus according to an embodiment of the present disclosure;
FIG. 2 is a front perspective view illustrating a portable apparatus according to an embodiment of the present disclosure;
FIG. 3 is a rear perspective view illustrating a portable apparatus according to an embodiment of the present disclosure;
FIG. 4 is a flowchart schematically illustrating a method of displaying an object in a portable apparatus according to an embodiment of the present disclosure;
FIG. 5 is a view illustrating an example of a page including an object in a portable apparatus according to an embodiment of the present disclosure;
FIGS. 6A, 6B,6C,and 6D are views illustrating an example of a method of displaying an object in a portable apparatus according to an embodiment of the present disclosure;
FIG. 7 is a view illustrating an example of a movement distance between objects in a portable apparatus according to an embodiment of the present disclosure;
FIGS. 8A, 8B,and 8C are views illustrating an example of a method of displaying an object in a portable apparatus according to an embodiment of the present disclosure;
FIGS. 9A, 9B,and 9C are views illustrating an example of a method of displaying an object in a portable apparatus according to an embodiment of the present disclosure;
FIG. 10 is a view illustrating an example of an event time line including an object in a portable apparatus according to an embodiment of the present disclosure;
FIGS. 11A, 11B, and 11C are views illustrating an example of a method of displaying an object in a portable apparatus according to an embodiment of the present disclosure;
FIG. 12 is a view illustrating an example of a movement distance between objects of a portable apparatus according to an embodiment of the present disclosure;
FIGS. 13A, 13B,and 13C are views illustrating an example of a method of displaying an object in a portable apparatus according to an embodiment of the present disclosure; and
FIGS. 14A and 14B are views illustrating an example of an object display setting according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms including ordinal numbers such as first, second, and the like may be used to describe various structural elements. However, the terms do not limit the structural elements, but are only used to distinguish a structural element from another structural element. For example, without departing from the scope of the present disclosure, a first structural element can be named a second structural element. Similarly, the second structural element can be also named the first structural element. The term "and/or" refers to a combination of related items or any one item of the related items.

The term "application" corresponds to an Operating System (OS) for a computer, or software which is executed on a mobile OS and is used by a user. For example, the software includes a word processor, a spread sheet, a Social Network System (SNS), a chatting program, a map, a music player, a video player, and the like.

A widget corresponds to a mini application which is one of Graphic User Interfaces (GUIs) smoothly supporting a mutual relation between a user and an application or an OS. For example, widgets may include a weather widget, a calculator widget, a clock widget, and the like. The widgets can be created in a form of icons, and installed in a desktop PC, a portable apparatus, a blog, a café, a personal homepage, and the like. The widgets can be formed to use a corresponding service without a use of a web browser. Further, the widgets may include short-cut icons for use in an execution of a designated application a direct contact to a designated path.

The terms used in the description are merely used to describe a specific embodiment, and are not intended to limit the present disclosure. A singular expression includes a plural expression unless it includes a different meaning in context. It should be understood that the terms "includes" or "has" in the present application indicate that a feature, a numeral, a step, an operation, a structural element, parts, or the combinations thereof exists, and do not exclude an additional possibility or existence of one or more other features, numerals, steps, operations, structural elements, parts or the combinations thereof.

As a non-exhaustive illustration only, an apparatus (e.g., a portable apparatus) described herein may refer to mobile devices such as a cellular phone, a Personal Digital Assistant (PDA), a digital camera, a portable game console, an MP3 player, a Portable/Personal Multimedia Player (PMP), a handheld e-book, a tablet PC, a portable lap-top PC, a Global Positioning System (GPS) navigation, and devices such as a desktop PC, a high definition television (HDTV), an optical disc player, a set-top box, and the like capable of wireless communication or network communication consistent with that disclosed herein.

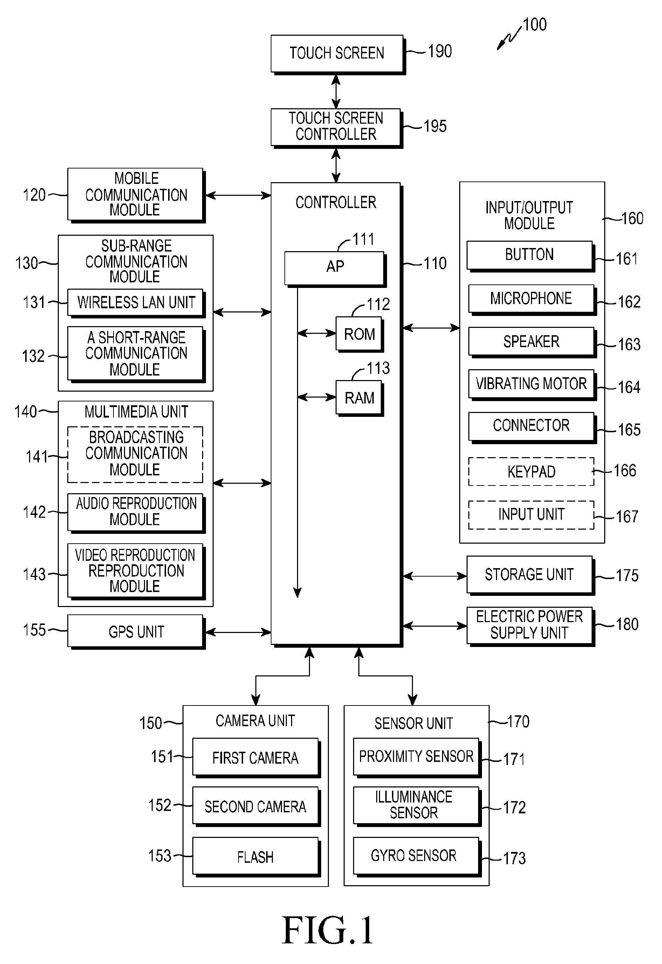

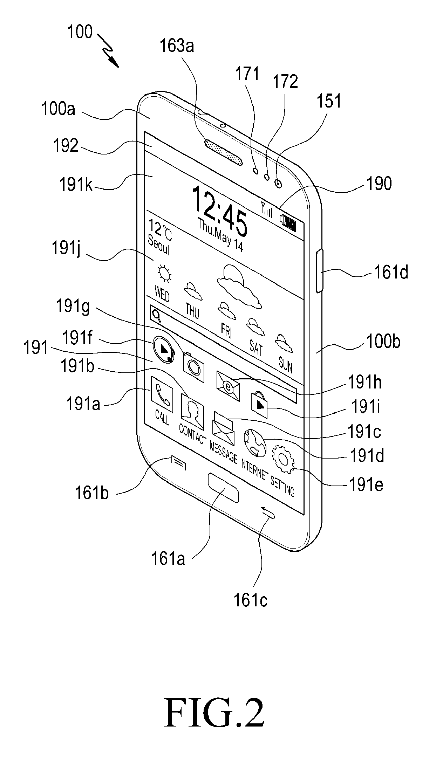

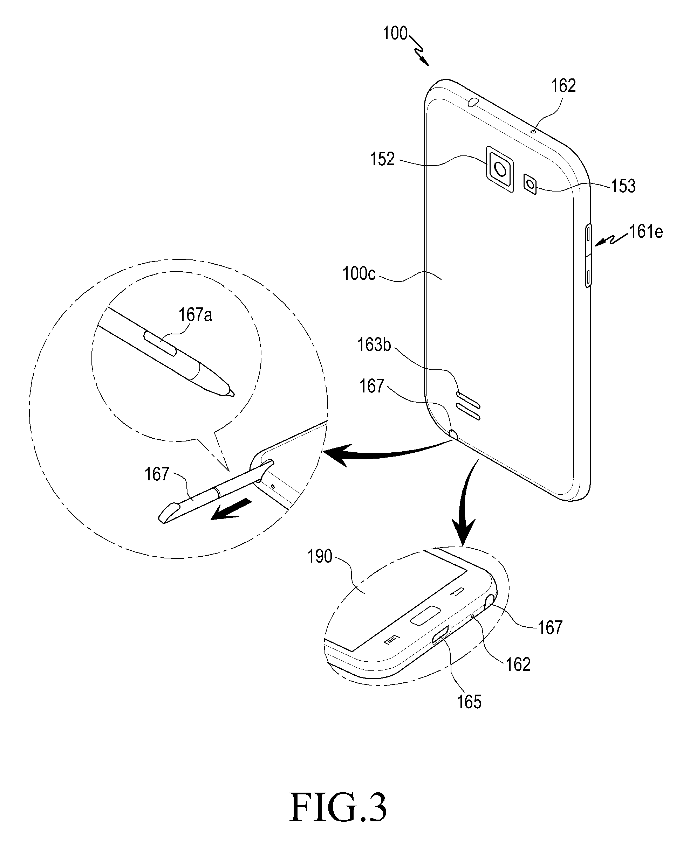

FIG. 1 is a schematic block diagram illustrating a portable apparatus according to an embodiment of the present disclosure.FIG. 2 is a front perspective view illustrating a portable apparatus according to an embodiment of the present disclosure. FIG. 3 is a rear perspective view illustrating a portable apparatus according to an embodiment of the present disclosure.

Referring to FIG. 1, the portable apparatus 100 may include a controller 110, a mobile communication module 120, a sub-range communication module 130, a multimedia unit 140, a camera unit 150 a GPS unit 155, an Input/Output (I/O) module 160, a sensor unit 170, a storage unit 175, an electric power supply unit 180, a touch screen 190, and a touch screen controller 195.

The portable apparatus 100 can be connected by wired-cable or wirelessly to an external device (not shown) using the mobile communication unit 120, the sub-communication unit 130, and/or the connector 165. The external device may include another portable apparatus (not shown), a portable phone (not shown), a smart phone (not shown), a tablet PC (not shown), a server (not shown) and/or the like. The portable apparatus can be carried, and transmit and receive data, which has one or more touch screens. The portable apparatus includes a portable phone, a smart phone, a tablet PC, a 3D TV, a smart TV, an LED TV, an LCD TV, and the like. In addition, the portable apparatus includes peripheral devices which may be connected to the portable apparatus and devices capable of transmitting and receiving data to/from other devices located at a remote place.

The portable apparatus 100 may include a touch screen 190 and a touch screen controller 195. Further, the portable apparatus 100 may include a controller 110, a mobile communication unit 120, a sub-communication unit 130, a multimedia unit 140, a camera unit 150, a GPS unit 155, an input/output unit 160, a sensor unit 170, a storage unit 175 and an electric power supply unit 180. The sub-communication unit 130 may include at least one of a wireless LAN unit 131 and a short-range communication unit 132.

The multimedia unit 140 may include at least one of a broadcasting unit 141, an audio reproduction unit 142, and a video reproduction unit 143.

The camera unit 150 may include at least one of a first camera 151 and a second camera 152. The camera unit 150 may also include a flash 153.

The input/output unit 160 may include at least one of a button 161, a microphone 162, a speaker 163, a vibration motor 164, a connector 165, a keypad 166, and an input unit 167.

The sensor unit 170 may include a proximity sensor 171, an illuminance sensor 172, and a gyro sensor 173.

The controller 110 may include an Application Processor (AP) 111, a Read Only Memory (ROM) 112 in which a control program for controlling the portable apparatus 100 is stored, a Random Access Memory (RAM) 113 which stores signals or data to be input from the exterior of the portable apparatus 100 and is used as a memory region for storing an operation performed in the portable apparatus 100.

The controller 110 controls a whole operation of the portable apparatus 100 and a signal flow among internal structural elements 120, 130, 140, 150, 160, 170, 175, 180, 190, and 195 of the portable apparatus 100. Further, the controller 110 performs a function of processing data. The controller 110 controls an electric power supply from an electric power supply unit to the internal structural elements 120, 130, 140, 150, 160, 170, 175, 180, 190, and 195. Further, the controller 110 executes an OS and applications stored in the storage unit 175.

The AP 111 may include a Graphic Processing Unit (GPU) (not shown) for a graphic processing. The AP 111 has a core (not shown) and the GPU configured by a System On Chip (SOC). The AP 111 may include a various number of cores. For example, the AP 111 may include a single core, dual cores, triple cores, quad cores, and the like. Further, the AP 111, the ROM 112, and the RAM 113 may be connected to one another through an internal bus.

The controller 110 can control the mobile communication unit 120, the sub-communication unit 130, the multimedia unit 140, the camera unit 150, the GPS unit 155, the input/output unit 160, the sensor unit 170, the storage unit 175, the electric power supply unit 180, the touch screen 190, and the touch screen controller 195.

According to various embodiments of the present disclosure, the controller 110 displays a page including a plurality of objects on the touch screen, detects a touch on the page, and controls the touch screen to display the plurality of objects moving in a relative velocity in response to a continuous movement of the touch.

The controller 110 controls the continuous movement of the touch to scroll the page in an upward, downward, left, or right direction from a detected position of the touch.

According to various embodiments of the present disclosure, when the continuous movement of the detected touch is performed in an upward or downward direction, the controller 110 controls a relative velocity of a first object among the plurality of objects to be determined to correspond to at least one of a vertical length of the first object of the plural objects and a vertical length of the page.

According to various embodiments of the present disclosure, when the continuous movement of the detected touch is performed in the upward or downward direction, the controller 110 controls the relative velocity of the first object among the plurality of the objects so that the first object moves slower than another object which has a longer vertical length, among the plural objects as the first object has a shorter vertical length.

According to various embodiments of the present disclosure, when the continuous movement of the detected touch is performed in a left or right direction, the controller 110 controls a relative velocity of a second object among the plurality of the objects to be determined to correspond to at least one of a horizontal length of the second object and a horizontal length of the page.

According to various embodiments of the present disclosure, when the continuous movement of the detected touch performed in the left or right direction, the controller 110 controls the relative velocity of the second object among the plurality of the objects so that the second object moves slower than another object which has a longer horizontal length, among the plural objects as the second object has a shorter horizontal length.

According to various embodiments of the present disclosure, the controller 110 controls the relative velocity of the plural objects to be determined to correspond to each position of the plural objects arranged on the page.

According to various embodiments of the present disclosure, the controller 110 determines whether a third object moving in a relative velocity among the plural objects overlaps a fourth object adjacent to the third object and moving in a relative velocity.

According to various embodiments of the present disclosure, when the third object slowly approaches the fourth object, the controller 110 controls the third object to have the relative velocity substantially identical to the relative velocity of the fourth object which the third object overlap.

According to various embodiments of the present disclosure, when the third object slowly approaches the fourth object, the controller 110 controls the third object to have the relative velocity to be changeable depending on the relative velocity of the fourth object which the third object overlaps.

According to various embodiments of the present disclosure, when the page is changed to another page succeeding the page (e.g., a following page), corresponding to the continuous movement of the touch, the controller 110 controls to provide a feedback.

According to various embodiments of the present disclosure, the controller 110 further includes displaying a mini-map on a side of an upper portion of the page.

According to various embodiments of the present disclosure, the controller 110 can calculate the relative velocity of the plural objects, and controls the plural objects which move in the calculated relative velocity in proportion to the continuous movement of the touch, to be displayed. Further, the controller 110 may include a separate calculating unit capable of calculating a velocity and/or a relative velocity.

According to various embodiments of the present disclosure, when the first object approaches the second object to overlap and temporally stops the approach, the controller 110 can control the first object to have the relative velocity substantially identical to the relative velocity of the second object.

According to various embodiments of the present disclosure, when the first object approaches the second object to overlap and stops the approach, the controller 110 can control the first object to have the relative velocity which depends on the relative velocity of the second object.

The controller 110 controls a vibration motor and a speaker to respectively provide a tactile feedback and an auditory feedback in response to the continuous movement of the touch.

According to various embodiments of the present disclosure, the term "controller" may refer to the AP 111, the ROM 112, and the RAM 113.

Under a control of the controller 110, the mobile communication unit 120 enables the portable apparatus 100 to be connected to the external device through the mobile communication using one or more antennas (not shown). The mobile communication unit 120 transmits and receives a voice call, a video call, a Short Message Service (SMS), a Multimedia Message Service (MMS), and radio signals for a data communication to/from a portable terminal (not shown), a smart phone (not shown), a tablet PC, or another portable terminal (not shown), which has a phone number to be input in the portable apparatus 100.

The sub-communication unit 130 may include at least one of the wireless LAN unit 131 and the short-range communication unit 132. For example, the sub-communication unit 130 may include only the wireless LAN unit 131, only the short-range communication unit 132, or both the wireless LAN unit 131 and the short-range communication unit 132.

The wireless LAN unit 131, under a control of the controller 110, can be connected to the Internet using radio waves at a location where the AP (not shown) is arranged. The wireless LAN unit 131 supports the wireless LAN provision (IEEE802.11x) of the Institute of Electrical and Electronics Engineers (IEEE). The short-range communication unit 132, under a control of the controller 110, can perform a short-range communication between the portable apparatus 100 and the external device. The short-range communication unit may include an Infrared Data Association (IrDA) module, a Near Field Communication (NFC) module, and the like.

The portable apparatus 100 may include at least one of the mobile communication unit 120, the wireless LAN unit 131, and the short-range communication unit 132 according to the configuration of the portable apparatus 100. For example, the portable apparatus 100 may include a combination of the mobile communication unit 120, the wireless LAN unit 131, and the short-range communication unit 132.

According to various embodiments of the present disclosure, the term "communication unit" refers to the mobile communication unit 120 and the sub-communication unit 130. According to various embodiments of the present disclosure, the communication unit can receive a sound source which a music application is able to execute, from the external device, under a control of the controller 110. The controller 110 can store the sound source which is received from the external device, in the storage unit.

The multimedia unit 140 includes the broadcasting unit 141, the audio reproduction unit 142, and the video reproduction unit 143. Under a control of the controller 110, the broadcasting unit 141 receives broadcasting signals(e.g., TV broadcasting signals, radio broadcasting signals, data broadcasting signals, and/or the like), and broadcasting added information(e.g., an Electric Program Guide (EPG) and an Electric Service Guide (ESG), and/or the like), which are transmitted from external broadcasting stations, and can reproduce the signals and the information using the touch screen, a video codec unit (not shown), and an audio codec unit (not shown).

The audio reproduction unit 142, under a control of the controller 110, can reproduce audio sources(e.g., audio files which have an extension name of mp3, wma, ogg, wav, and the like), which are received from the exterior of the portable apparatus 100 and stored in the storage unit 175, by using the audio codec unit.

According to various embodiments of the present disclosure, the audio reproduction unit 142, under a control of the controller 110, can reproduce an auditory feedback(e.g., an output of the audio source previously stored in the storage unit), to correspond to the continuous movement of the touch or the touch detected from the page.

The video reproduction unit 143, under a control of the controller 110, can reproduce digital video files(e.g., files which have an extension name of mpeg, mpg, mp4, avi, mov, mkv, and the like) by using the video codec unit. Most applications which are installed in the portable apparatus 100 can reproduce the audio files and video files by using the audio codec unit and the video codec unit.

It will be easily appreciated by a person skilled in the art that many kinds of video and audio codec units have been manufactured and sold. Further, the video reproduction unit 143 can reproduce the audio source by using the video codec unit or the audio codec unit.

The multimedia unit 140 may include the audio reproduction unit 142 and the video reproduction unit 143 except for the broadcasting and communication unit 141 according to the performance and structure of the portable apparatus 100. Moreover, the audio reproduction unit 142 and the video reproduction unit 143 of the multimedia unit 140 may be included in the controller 110. According to various embodiments of the present disclosure, the term "video codec" refers to one or more video codec units. According to various embodiments of the present disclosure, the term "audio codec unit" refers to one or more audio codec units.

The camera unit 150, under a control of the controller 110, may include at least one of a first camera 151 arranged on a front surface of the portable apparatus 100 and a second camera 152 arranged on a rear surface of the portable apparatus 100, which can photograph a stationary image or a video. The camera unit 150 may include one of the first camera 151 and the second camera152, or both the first camera 151 and the second camera 152. Furthermore, the first camera 151 and/or the second camera152 may include an auxiliary light source(e.g., a flash 153), for supplying an amount of light necessary for a photographing.

An additional front camera (not shown) may be arranged on the front surface of the portable apparatus and spaced apart from the first camera 151 at a distance of 2 cm ∼ 8 cm, or an additional rear camera (not shown) may be arranged on the rear surface of the portable apparatus and spaced from the second camera 152 at a distance of 2 cm ∼ 8 cm, so as to take a three-dimensional stationary image or a three-dimensional video under a control of the controller 110.

The GPS unit 155 periodically receives information(e.g., position information and time information which the portable apparatus can receive from GPS satellites), from the plurality of GPS satellites (not shown) in the Earth's orbit. The portable apparatus 100 identifies the position and velocity thereof, and time by using signals received from the plurality of GPS satellites.

The input/output unit 160 may include at least one of the buttons 161, the microphone 162, the speaker 163, the vibration motor 164, the connector 165, the keypad 166, and the input unit 167.

In the portable apparatus 100 shown in FIGS. 1 to 3, the buttons 161 include a menu button 161b, a home button 161a and a back button 161c which are arranged at a lower portion of the front surface 100a of the portable apparatus 100. The buttons 161 may include an electric power source/lock button 161 d arranged on a side surface 100b and at least one volume button 161 e. The portable apparatus 100 may include only the home button 161 a. Further, in the portable apparatus 100, the buttons 161 can be implemented by touch buttons as well as physical buttons. Furthermore, in the portable apparatus 100, the buttons 161 may be displayed on the touch screen 190.

The microphone 162 receives voices or sounds from an external source to generate electric signals under a control of the controller 110. The electric signals generated by the microphone 162 can be converted by the audio codec unit, and then are stored in the storage unit 175 or output through the speaker 163. One or more microphones 162 may be arranged on the front surface 100a, the side surface 100b, and the rear surface 100c of the portable apparatus 100. Further, at least one microphone 162 may be arranged on only the side surface 100b of the portable apparatus 100.

The speaker 163 can output sounds which correspond to various signals(e.g., radio signals), broadcasting signals, audio sources, video file or photographing, of the mobile communication unit 120, the sub-communication unit 130, the multimedia unit 140, or the camera unit 150 to the exterior of the portable apparatus 100 by using the audio codec unit under a control of the controller 110.

The speaker 163 can output sounds(e.g., a touch operation sound for an input of a phone number, or a photographing button operation sound), corresponding to functions which the portable apparatus 100 carries out. At least one speaker 163 may be arranged on the front surface 100a, the side surface 100b, and the rear surface 100c of the portable apparatus 100. In the portable apparatus 100 shown in FIGS. 1 to 3, the speakers 163a and 163b are respectively arranged on the front surface 100a and the rear surface 100c of the portable apparatus 100. Further, the plural speakers 16a and 163b are arranged on the front surface 100a of the portable apparatus 100, or only one speaker 163 arranged on the front surface 100a of the portable apparatus 100 while the plural speakers 163b are arranged on the rear surface of the portable apparatus 100.

Further, at least one speaker (not shown) is arranged on a side surface 100b of the portable apparatus 100. The portable apparatus 100 which has the at least one speaker arranged on the side surface 100b thereof can provide a different sound output in comparison with another portable apparatus which has only the speakers arranged on a front surface 100a and a rear surface 100c thereof.

According to various embodiments of the present disclosure, the speaker 163 can output an auditory feedback corresponding to the touch or the continuous movement of the touch detected by the controller 110 under a control of the controller 110.

The vibration motor 164 can convert electric signals into mechanical vibrations under a control of the controller 110. For example, the vibration motor 164 may include a linear vibration motor, a bar type vibration motor, a coin type vibration motor, a piezoelectric vibration motor, and/or the like. For example, when a request of a voice call is received from another portable apparatus (not shown), the vibration motor 164 operates in the portable apparatus 100 under a control of the controller. One or more vibration motors 164 may be arranged in the portable apparatus 100. Further, the vibration motor 164 can vibrate the whole portable apparatus 100, or only a part of the portable apparatus 100.

According to various embodiments of the present disclosure, the vibration motor 164 can output a tactile feedback corresponding to a touch or a continuous movement of a touch detected on a page under a control of the controller 110. Further, the vibration motor 164 may provide various tactile feedbacks(e.g., the intensity and continuous time of the vibration), in response to a control command of the controller 110.

The connector 165 can be used as an interface for connecting an external device (not shown) or the electric power source (not shown) to the portable apparatus 100. Under a control of the controller 110, the portable apparatus 100 can transmit data which is stored in the storage unit 175, to an external device through a wired cable connected to the connector 165, or receive data from the external device (not shown). The portable apparatus 100 can be supplied with electric power from an electric power source (not shown) through the wire cable connected to the connector 165, or charge a battery (not shown).

The keypad 166 can receive a key input of a user to control the portable apparatus 100. The keypad 166 includes a physical keypad (not shown) formed on a front surface 100a of the portable apparatus 100 or a virtual keypad (not shown) displayed on the touch screen 190. It will be easily appreciated by a person skilled in the art that the physical keypad (not shown) arranged on the front surface 100a of the portable apparatus 100 may be excluded according to the performance or structure of the portable apparatus 100.

The input unit 167 can be used to touch or select an object(e.g., a menu, a text, an image, a figure and an icon, displayed the touch screen or a page. The input unit 167 may include an electrostatic capacitive type, a resistance type, and an electromagnetic induction type of a touch screen and a virtual keyboard, by which letters can be input. The input unit 167 further includes a stylus pen or a haptic pen in which a pen vibration element(e.g., a vibration motor, an actuator, and/or the like), (not shown) vibrates using control information received from a communication unit of the portable apparatus 100. Further, the vibration element may vibrate using not the control information received from the portable apparatus 100 but sensing information detected by a sensor(e.g., an acceleration sensor), (not shown) which is embedded in the input unit 167. It is easily appreciated by a person skilled in the art that the input unit 167 which is able to be inserted into an insertion opening of the portable apparatus 100 may be excluded according to the performance or the structure of the portable apparatus 100.

The sensor unit 170 includes at least one sensor for detecting the status of the portable apparatus 100. For example, the sensor unit 170 may include a proximity sensor 171 for detecting the absence or presence of a proximity to the portable apparatus 100, an illuminance sensor 172 for detecting an amount of light surrounding the portable apparatus 100, a gyro sensor 173 for detecting a direction using a rotational inertia of the portable apparatus 100, an acceleration sensor (not shown) for detecting an inclination of three axes(e.g., X, Y, and Z axes), of the portable apparatus, a gravity sensor for detecting an operational direction of the gravity, and an altimeter for detecting an altitude by measuring an atmospheric pressure, which are located at an upper portion of the front surface 100a of the portable apparatus 100 of a user, or the like.

The at least one sensor included in the sensor unit 170 detects the status of the portable apparatus 100, and generates and transmits signals corresponding to the detection, to the controller 110. It is easily appreciated by a person skilled in the art that the sensor of the sensor unit 170 may be added to or excluded according to the performance of the portable terminal 100.

The storage unit 175 can store signals or data input/output to correspond to operations of the mobile communication unit 120, the sub-communication unit 130, the multimedia unit 140, the camera unit 150, the GPS unit 155, the input/output unit 160, the sensor unit 170, and the touch screen 190. The storage unit 175 can store GUI relating to a control program for controlling the controller 110 and applications which are provided by a manufacturer and downloaded from the exterior, images for the GUI, user information, documentations, databases or related data.

According to various embodiments of the present disclosure, the storage unit 175 may store an execution screen which includes a page including an individual object or a plurality of objects, or an application including a plurality of objects, a size of the individual object(e.g., transverse length x lengthwise length), a layout of a page or application screen, a position of the individual object in the page, a type of the individual object(e.g., a text, an image, an audio file, a video file, the like, and a combination of one or more objects), a velocity of the individual object which is calculated by the controller, a relative velocity of an object, and the like. The storage unit 175 may store touch information corresponding to a touch or a continuous movement of a touch(e.g., X and Y coordinates of a position of the detected touch), a touch detection time and the like, or hovering information(e.g., X, Y and Z coordinates of a hovering), a hovering time and the like, corresponding to a hovering. The storage unit 175 may store kinds of the continuous movements of the touch(e.g., a flick, a drag, or the like).

The storage unit 175 may store an auditory feedback(e.g., sound source and the like), which is output from the speaker 163 to correspond to each input touch and can be recognized by a user, and a tactile feedback(e.g., a haptic pattern and the like), which is output from the vibration motor 164 and can be recognized by a user.

According to various embodiments of the present disclosure, the term "storage unit" refers to the storage unit 175, ROM and RAM in the controller, and a memory card inserted in the portable apparatus 100(e.g., a micro SD card, a memory stick, and the like). The storage unit may include a non-volatile memory, a volatile memory, a Hard Disk Drive (HDD), and a Solid State Drive (SSD).

The electric power supply unit 180, under a control of the controller 110, can supply one or more batteries (not shown) which are disposed in the portable apparatus 100, with electric power. One or more batteries (not shown) are disposed between the rear surface 100c and the touch screen 190 arranged on the front surface 100a. Further, the electric power supply unit 180 can supply the portable apparatus 100 with electric power which is input from an external electric power source (not shown) through a wired cable connected to the connector 165.

The touch screen 190 can provide a user with the GUI corresponding to various services(e.g., a voice call, a data transmission, broadcasting, photographing, or applications). The touch screen 190 transmits analog signals corresponding to a single touch or multi touches input through the GUI, to the touch screen controller 195. The touch screen 190 can receive a single touch or multi touches input by a touchable input unit 167 and a body(e.g., a finger including a thumb), of a user.

According to various embodiments of the present disclosure, a touch should not be limited to a contact of a body of a user or a touchable input unit 167 to the touch screen 190, and may include a non-contact(e.g., a hovering having a distance less than 30 mm between the touch screen 190 and the body of the user, or between the touch screen 190 and the input unit 167). It will be easily appreciated by a person skilled in the art that the non-contact distance which can be detected by the touch screen 190 may be changed according to the performance or structure of the portable apparatus 100.

The touch screen 190 may include a resistance type, an electrostatic capacitive type, an infrared type, an ultrasonic wave type of a touch screen, and/or the like.

The touch screen controller 195 converts analog signals which correspond to a single touch and multi touches received from the touch screen 190, to digital signals(e.g., X and Y coordinates corresponding to the detected touch position), and transmits the digital signals to the controller 110. The controller 110 can calculate X and Y coordinates corresponding to the touch position on the touch screen 190 by using the digital signals received from the touch screen controller 195. Further, the controller 110 can control the touch screen 190 by using the digital signals received from the touch screen controller 195. For example, the controller 110 may display that a short-cut icon 191f is selected on the touch screen 190 or execute and display an application corresponding to the selected short-cut icon 191f, in response to the input touch.

According to various embodiments of the present disclosure, one or more touch screen controllers 195 can control one or more touch screens 190. The touch screen controllers 195 may be included in the controller 110 in correspondence to the performance or structure of the portable apparatus 100.

With structural elements of the portable apparatus shown in FIG. 1, at least one structural element may be added or excluded in correspondence to the performance of the portable apparatus 100. In addition, it is appreciated by a person skilled in the art that the positions of the structural elements may be changed in correspondence to the performance or structure of the portable apparatus.

FIG. 2 is a front perspective view schematically illustrating a portable apparatus according to an embodiment of the present disclosure.

FIG. 3 is a rear perspective view schematically illustrating a portable apparatus according to an embodiment of the present disclosure.

Referring to FIGS. 1 to 3, the portable terminal 100 has the touch screen 190 positioned at a center portion of the front surface 100a thereof. Referring to FIG. 2, when a user performs a log-in, a home screen is displayed on the touch screen 190. The portable apparatus 100 may have a plurality of different home screens. The home screen 191 has short-cut icons 191a,191b, 191c, 191d, 191e, 191f, 191g, 191h, and 191i, a weather widget 191j, a clock widget 191k, and the like which correspond to application and are selected by a user, displayed therein. The home screen 191 has a status bar 192 which displays a status of the portable apparatus 100 such as a battery charging status, an intensity of received signals, and a current time, at an upper portion thereof. According to various embodiments of the present disclosure, the home screen 191 of the portable apparatus 100 may not display the status bar 192 according to an OS.

The portable apparatus 100 may have the first camera 151, the speaker 163a, the proximity sensor 171 and the illuminance sensor 172 which are arranged at an upper portion on the front surface 100a thereof. Further, the portable apparatus 100 may have the second camera 152, the flash 153, and the speaker 163b which are arranged on the rear surface thereof.

The portable apparatus 100 may have the home button 161a, the menu button 161b, and the back button 161c which are arranged at a lower portion on the front surface thereof. The button 161 may be implemented by not the physical button but the touch button. Further, the button 161 may be displayed along with the home screen in the touch screen 190.

The portable apparatus 100 may have the electric power/lock button 161 d, the volume button 161e, one or more microphones 162 and the like which are arranged on the side surface 100b thereof. The portable apparatus 100 has the connector 165 mounted on the side surface of the lower end thereof. The connector 165 may be connected to the external device by a wired cable. Moreover, the portable apparatus 100 may have an insertion opening formed on the side surface of the lower end thereof, in which the input unit 167 having buttons 167a is inserted. The input unit 167 is inserted in the portable apparatus 100 through the insertion opening, and extracted out of the portable apparatus 100 when the input unit 167 is used.

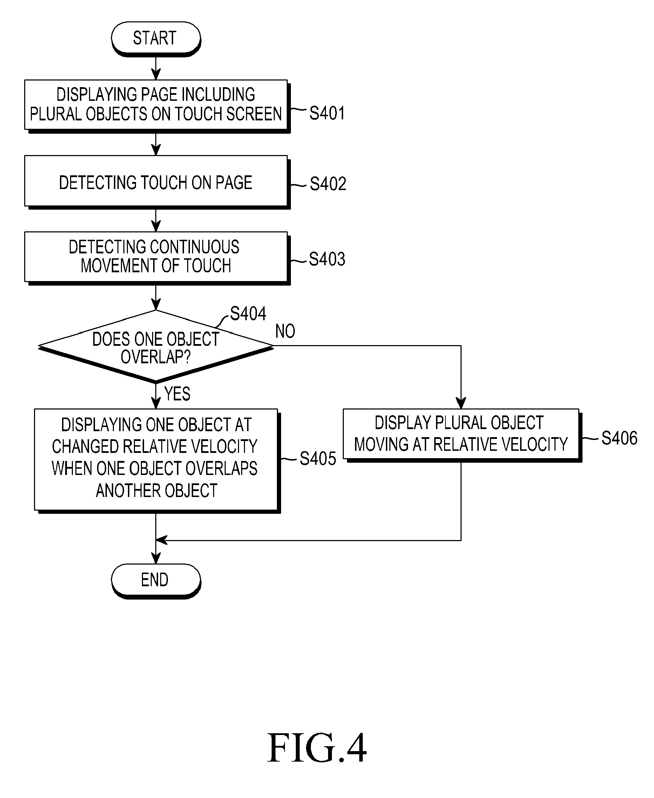

FIG. 4 is a flowchart schematically illustrating a method of displaying an object in a portable apparatus according to an embodiment of the present disclosure.

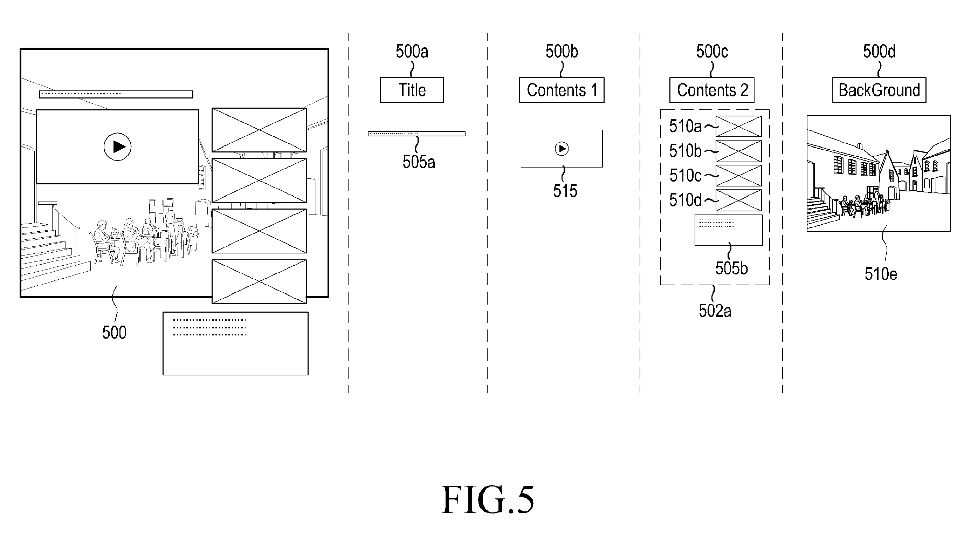

FIG. 5 is a view illustrating an example of a page including an object in a portable apparatus according to an embodiment of the present disclosure.

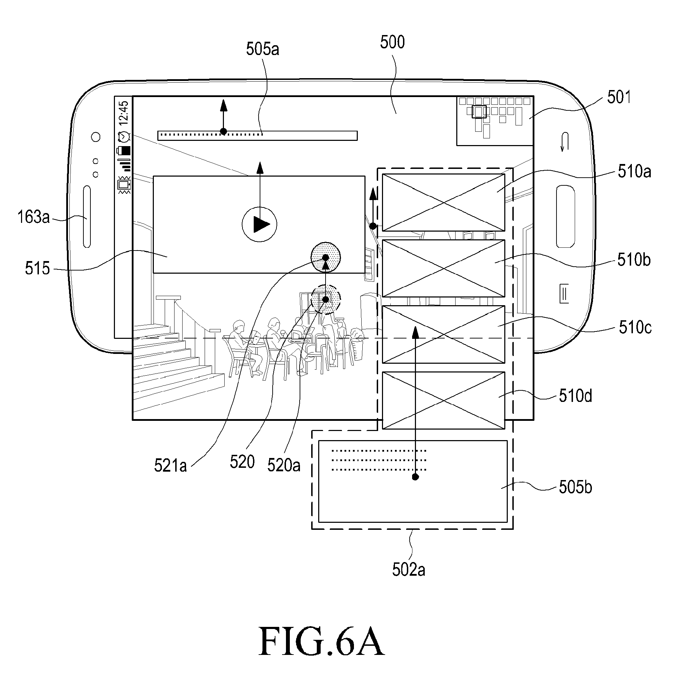

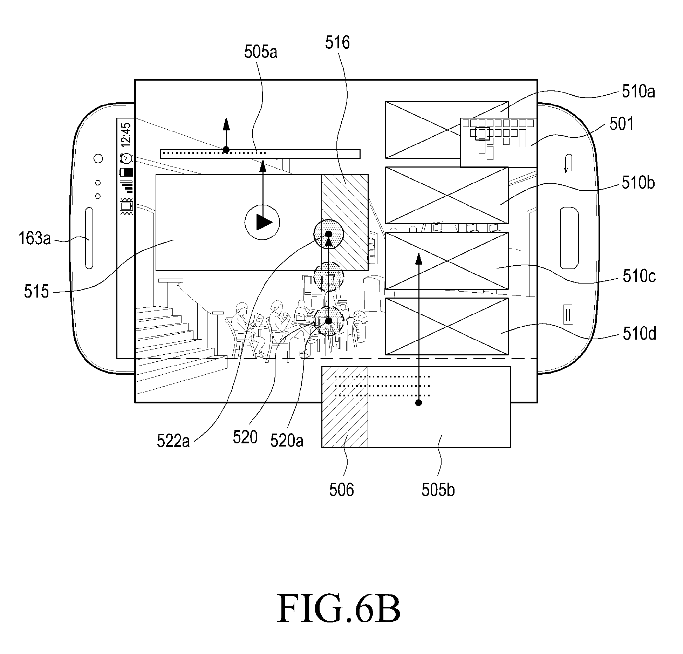

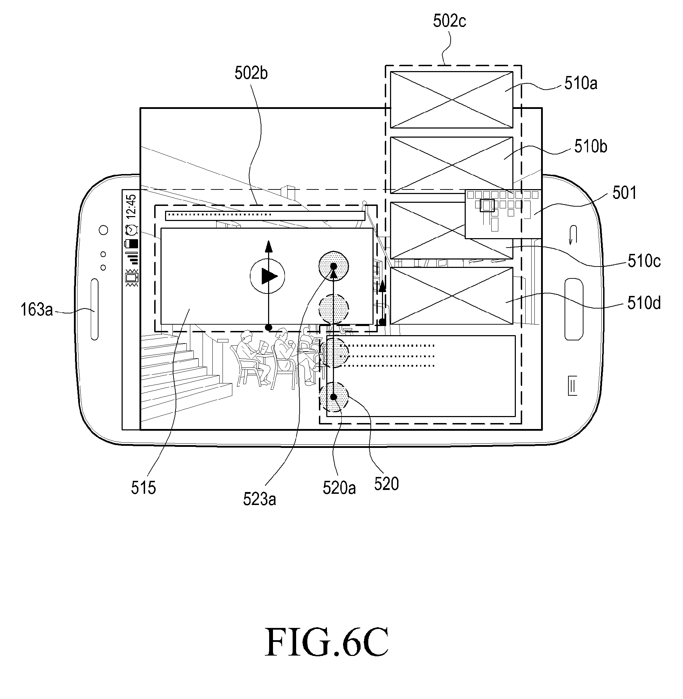

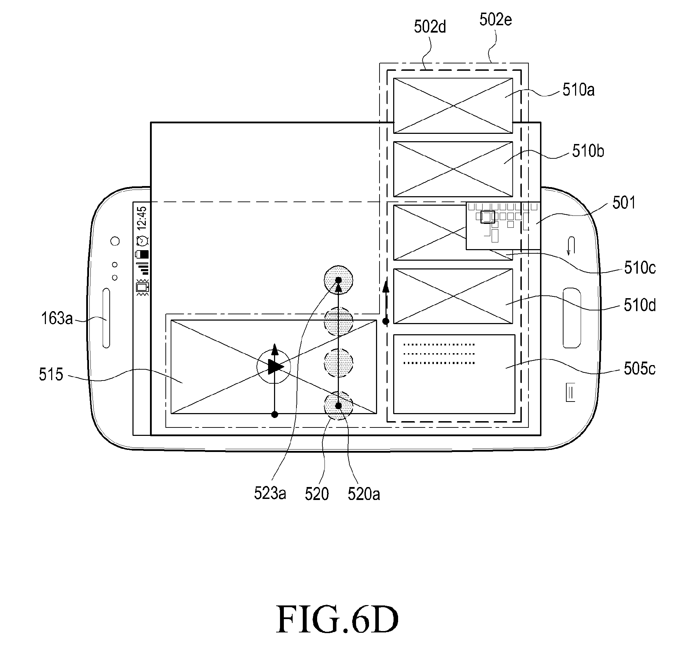

FIGS. 6A, 6B, 6C, and 6D are views illustrating an example of a method of displaying an object in a portable apparatus according to an embodiment of the present disclosure.

At operation S401, a page including a plurality of objects is displayed on the touch screen.

Referring to FIGS. 5, 6A, 6B, and 6C, the page 500 including at least one object is displayed on the touch screen 190. The total number of pages including the page 500 can be identified through a mini map 501 displayed at an upper portion of the page in a transparency of 50%. For example, a user may determine through the mini map 501 with the transparency that the total pages are nineteen.

The total pages may be one file with an extension name of a file. The file may include a word processing file, a presentation file, a web page, and/or the like. However, various embodiments of the present disclosure are not limited thereto. The page included in one file may have one or more objects which can be scrolled in a relative velocity in correspondence to the continuous movements of the touch input by a user. The page 500 may be a screen in which an application (not shown) is executed and displayed on the touch screen 190. For example, the page 500 includes a screen of a certain application, a screen of a gallery application, a screen of a SNS application, a screen of a music application, a screen of a video application or a screen of a diary application, or the like. However, various embodiments of the present disclosure are not limited to a screen of a specific application.

The total pages can be displayed on the touch screen 190 when a user selects one executable application, or can be executed and displayed when a user selects a separate short-cut icon corresponding to the total pages.

The page 500 may be formed with various objects. For example, the page 500 may be formed with only one of texts 505, images 510a, 510b, 510c, and 510d, audios (not shown), and videos 515, or a combination of the texts 505, the images 510a, 510b, 510c, and 510d, the audios (not shown), and the video 515. Combinations of the objects may include, for example, a combination of text and image objects (not shown), a combination of text and video objects (not shown), and a combination of image and audio objects (not shown). Referring to FIGS. 5, 6A, 6B, 6C, 6D, 7, 8A, 8B, 9A, 9B, 9C, 10, 11A, 11B, 11C, 12, 13A, 13B and 13C, it will be easily appreciated by a person skilled in the art that the page 500 can be formed with only one object as well as the plurality of objects.

The page 500 may have various layouts in order to arrange the object. For example, the layout of the page 500 may include a title 500a, a first content 500b, a second content 500c, and a background 500d. According to the layout of the page 500, the title 500a is formed with the text object 505a, the first content 500b is formed with the video object 515, the second content 500c is formed with the image objects 510a, 510b, 510c, and 510d, and the text object 505b, and the background 500d is formed with the image object 510e. In a case of the second content 500c, a plurality of image objects 510a, 510b, 510c, and 510d, and one text object 505b are grouped and form a first group of the objects 502a. Further, one background may be formed without the text object or the image object.

It will be easily appreciated by a person skilled in the art that the page 500 can be added, excluded, and changed according to at least one object and layout.

At operation S402, the touch is detected on the page.

Referring to FIG. 6A, the touch 520 input by a user is detected on the page 500 displaying the plurality of objects. The controller 110 detects the touch 520 on the page 500 through the touch screen 190 and the touch screen controller 195. The controller 110 receives position information(e.g., XI and Y1 coordinates) corresponding to a touch position 520a, corresponding to the touch 520 from the touch screen controller 195.

The controller 110 can store a touch, a touch detection time(e.g., 12:45), and touch information(e.g., continuous touch time), touch pressure, and the like, corresponding to the touch, which are included in the received position information, in the storage unit. The touch 520 detected on the page 500 may be generated by one of fingers including a thumb or a touchable input unit 167. According to various embodiments of the present disclosure, at operation S401, a touch is detected on the background 510e of the page 500. However, various embodiments of the present disclosure are not limited thereto. According to various embodiments of the present disclosure, a touch may be detected on other objects 505, 510a, 510b, 510c, and 510d and 515 displayed on the page 500.

At operation S403, a continuous movement of a touch is detected.

Referring to FIGS. 6A, 6B, and 6C, the continuous movement of the touch 520 input by a user is detected on the page 500. The controller 110 can detect the continuous movement of the touch 520 of an upward direction to the electric power/lock button 161d from an initial touch position 520a through the touch screen 190 and the touch screen controller 195(e.g., a plurality of X and Y coordinates corresponding to the continuous touch from the initial touch position 520a to a final touch position 523a). The controller 110 receives plural pieces of position information corresponding to the continuous movements of the touch 520 from the touch screen controller 190(e.g., a plurality of X and Y coordinates corresponding to the continuous touch).

The continuous movement of the touch 520 may include a continuous movement of a touch in an inverse direction(e.g., in a direction to the volume button 161e), against the continuous movement of the initially detected touch 520 to the electric button 161 d. It will be easily appreciated by a person skilled in the art that the direction of the continuous movement of the touch 520(e.g., the direction to the button 161d or 161e arranged on the side surface), can be changed according to a rotation of the portable apparatus 100.

The continuous movement of the touch 520 can be held from the initial touch position 520a to the final touch position 523a in a state of maintaining the contact. The continuous movement of the touch 520 can be held from the initial touch position 520a to a first intermediate touch position 521a in a state of maintaining the contact. Further, the continuous movement of the touch 520 can be held from the initial touch position 520a to a second intermediate touch position 522a in a state of maintaining the contact. The first intermediate touch position 521a and the second intermediate touch position 522a are merely examples according to various embodiments of the present disclosure, and the controller 110 can detect many touch positions (not shown) among the initial touch position 520a, the first intermediate touch position 521 a, the second intermediate touch position 522a and the final touch position 523a.

The continuous movement of the touch 520 means that the contact is continuously maintained for the movement of the touch(e.g., 10mm), from the initial touch position 520a to the final touch position 523a of a page.

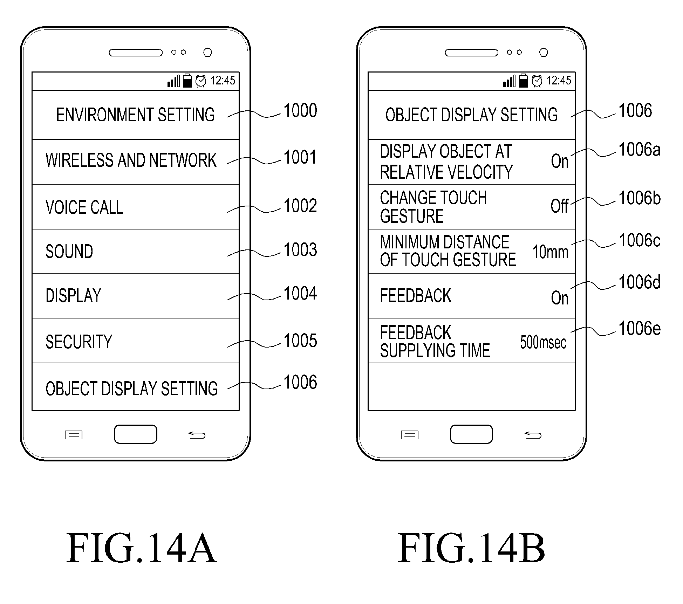

FIGS. 14A and 14B are views illustrating an example of an object display setting according to an embodiment of the present disclosure.

Referring to FIGS. 14A and 14B, a determined distance in an object display setting 1006 can be input and/or changed through a minimum distance setting 1006c for the continuous movement(e.g., a touch gesture), of the touch.

The plurality of objects 505, 510a, 510b, 510c, and 510d, and 515 displayed on the page 500 can be scrolled at a different and relative velocity according to the distance, the time, or the direction of the continuous movement of the touch 520. Further, the plurality of the objects 510a, 510b, 510c, and 510d, and 505b of the second content 500c correspond to the first group of the objects 502a, and accordingly can be scrolled in the same relative velocity.

The page 500 can be scrolled in an upward, downward, left, or right direction from the initially detected position 520a in correspondence to the direction of the continuous movement of the touch 520.

The touch gesture corresponding to the continuous movement of the touch 520 includes a flick or a drag, but is not limited thereto. Referring to FIGS. 14A and 14B, the touch gesture can be selected from and/or changed to one of the flick and the drag through a menu of a touch gesture change 1006a of the object display setting 1006.

The controller 110 can provide a user with a feedback in response to the detection of the continuous movement of the touch 520. The feedback can be provided in a form of one of a visual feedback, an auditory feedback, a tactile feedback, and/or the like. The controller 110 can provide the user with combinations of the visual feedback, the auditory feedback, and the tactile feedback.

The visual feedback is provided in response to the detection of the continuous movement of the touch 520 by displaying a visual effect(e.g., an animation effect such as a separate image or a fade applied to a separate image distinguishably from the plurality of objects displayed on the touch screen 190). The auditory feedback is a sound responding to the detection of the continuous movement of the touch 520, and can be output by one of the first speaker 163a and the second speaker 163b, or both the first and second speakers 163a and 163b. The tactile feedback is a vibration responding to the detection of the continuous movement of the touch 520, and can be output by the vibration motor 164. At least one feedback may be held from the initially detected position 520a to the arrival 523a of the continuous movement of the touch 520. Referring to FIGS. 14A and 14B, in the object display setting 1006, the feedback(e.g., at least one of the visual feedback), the auditory feedback, and the tactile feedback, corresponding to the continuous movement of the touch can be selected and/or changed by setting the feedback 1006d. Further, in the object display setting 1006, at least one feedback can be input and/or changed by selecting a feedback providing time(e.g., 500 msec), when the feedback is provided to the user.

At operation S404, it is determined whether at least one object is overlapped.

The controller 110 determines whether at least one object among the plurality of objects is overlapped, in response to the continuous movement of the touch 520. The controller 110 can determine the absence or presence of the overlap of the at least one object by using the size and the position of the plural objects which are scrolled in a direction of the continuous movement of the touch 520.

Referring to FIGS. 6A, 6B, 6C, and 6D, according to various embodiments of the present disclosure, the controller 110 can determine that a video object 515 among the plurality of objects 505, 510a, 510b, 510c, and 510d, and 515 scrolled in the direction of the continuous movement of the touch 520 overlaps with a text object 505b. Further, the controller 110 can determine that a text object 505a overlaps with a video object 515 among the plurality of objects 505, 510a, 510b, 510c, and 510d, and 515 scrolled in the direction of the continuous movement of the touch 520.

The controller 110 can determine that the video object 515 overlaps with the text object 505b when a part 516 of the video object 515 overlaps with a part 506 of the text object 505b. Further, the controller 110 can determine that the text object 505a overlaps with the video object 515 among the plurality of objects 505, 510a, 510b, 510c, and 510d, and 515 scrolled in the direction of the continuous movement of the touch 520. The controller 110 can determine that the text object 505a overlaps with the video object 515 by determining that a part of the text object 505a overlaps with a part of the video object 515.

Referring to FIGS. 6A, 6B, 6C, and 6D, according to various embodiments of the present disclosure, when the continuous movement of the touch 520 is carried out in a left direction to the speaker 163a, the controller 110 can determine that a part (not shown) of the video object 515 overlaps with a part (not shown) of the image object 510a and 510b. Further, when the continuous movement of the touch 520 is performed in a right direction to the speaker 163a, the controller 110 can determine that the whole region of the text object 505a does not overlap with the image object 510a and 510b.

Because the overlapping object is changed according to the direction of the continuous movement of the touch 520, the controller 110 can determine the absence or presence of the overlap between the objects in response to the continuous movement of the touch 520. However, various embodiments of the present disclosure are not limited thereto. For example, the controller 110 can determine the presence or absence of the overlap between the objects in response to the display of the page 500 including the plurality of the objects displayed on the touch screen 500. The controller 110 can determine the presence or the absence of the overlap between the objects in response to the detection of the initial touch 520 in the page 500. The controller 110 firstly can calculate the number of cases in which the overlap between the objects can be carried out before the direction of the continuous movement of the touch 520 is determined.

At operation S404, when an object is determined to overlap another object, the controller 110 proceeds to operation S405 .

At operation S405, when one object overlaps with another object, the object having a changed relative velocity is displayed.

Referring to FIGS. 6A, 6B, and 6C, the controller 110 displays the object having the changed relative velocity, in response to one of the continuous movement of the touch 520 and the overlap of the objects.

The controller 110 scrolls the text object 505a along with the plurality of objects 510 and 515 having a different relative velocity in response to the continuous movement of the touch 520(e.g., the continuous movement of the touch 520 from the initial touch position 520a to the final touch position 523a). The controller 110 can scroll the text object 505a upwardly and slowly rather than scroll the plurality of the objects 510a, 510b, 510c, and 510d, and 515, in response to the continuous movement of the touch 520. When the continuous movement of the touch passes through the first intermediate touch position 521a, the controller 110 enables the text object 505a to slowly approach the video object 515 of the first content 500b which overlaps with the text object 505a, and stops scrolling of the text object 505a temporarily. A distance between the video object 515 and the text object 505a of which the scrolling is stopped may be changed depending on the layout of the page 500. For example, the distance between the text object 505a and the video object 515 is enough if the text object 505a does not appear to overlap with the video object 515.

The controller 110 can scroll the text object 505a of which the scrolling is temporarily stopped, at relative velocity substantially identical to that of the video object 515(e.g., more than 95% of the relative velocity of the video object 515). The controller 110 can change the relative velocity of the text object 505a which is scrolled in response to the continuous movement of the touch 520, in correspondence to the video object 515. The controller 110 can make the relative velocity of the text object 505a to be changed in proportional to the relative velocity of the video object 515.

The controller 110 can group the text object 505a and the video object 515 which have the identical relative velocity, and constitute a second object group 502b.

Moreover, the controller 110 scrolls the second group of the objects 502b along with the first object group 502a in response to the continuous movement of the touch 520(e.g., the continuous movement of the touch from the initial touch position 520a to the final touch position 523a). The controller 110 scrolls the second object group 502b upwardly and slowly rather than scroll the first object group 502a in response to the continuous movement of the touch 520. When the continuous movement of the touch 520 passes through the second intermediate touch position 522a, the second object group 502b is enabled to slowly approach the text object 505b of the second content 500c near the second object group 502b to be overlapped, and the scrolling is temporarily stopped. A distance between the text object 505b and the second object group 502b of which the scrolling is temporarily stopped can be changed depending on the layout of the page. For example, the distance between the second object group 502b and the text object 505b is enough if the second object group 502b does not appear to overlap with the text object 505b.

When the second object group 502b of which the scrolling is stopped is scrolled again, the controller 110 can scroll the second object group 502b at a relative velocity substantially identical to that of the text object 505b(e.g., within 95% of the relative velocity of the text object 505b). The controller 110 can change the relative velocity of the second object group 502b which is scrolled in response to the continuous movement of the touch 520, in correspondence to the relative velocity of the text object 505b with which the second object group 502b overlaps. The controller 110 can change the relative velocity of the second object group 502b in proportional to the relative velocity of the text object 505b.

The controller 110 can constitute a third object group 502c by grouping the second object group 502b and the first object group 502a including the text object 505b, which have the same relative velocity.

It will be easily appreciated by a person skilled in the art that the second object group 502b is constituted prior to the third object group502c.

The controller 110 can scroll the plurality of objects 505, 510a, 510b, 510c, and 510d, and 515 in the page 500 at a different relative velocity until the continuous movement of the touch 520 arrives at the final touch position 523a. When the continuous movement of the touch 520 arrives at the final touch position 523a and stops, the controller 110 stops the scrolling of the plurality objects 505, 510a, 510b, 510c, and 510d, and 515 in the page 500. Further, the controller 110 can scroll the object groups 502a, 502b and 502c until the continuous movement of the touch 520 arrives at the final touch position 523a.

When the continuous movement of the touch 520 passes through the final touch position 523a in the page and continuously proceeds to a boundary of another page(e.g., a transparent mini map 501), the controller 110 can display the page 500 and a part of another page (not shown) succeeding to the page 500.

The controller 110 can provide a user with a feedback corresponding to a display of the succeeding page (not shown). The provided feedback is substantially identical to a feedback responding to the detection of the continuous movement of the touch 520, and the description of the provided feedback will be omitted.

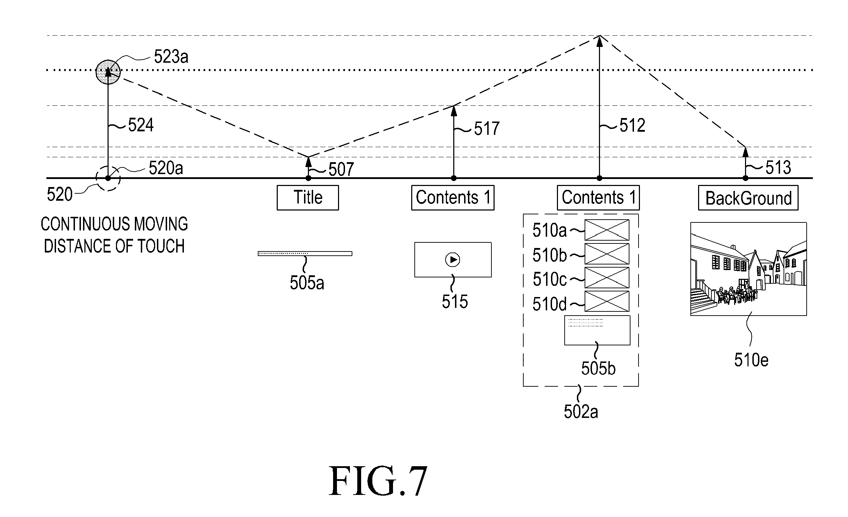

FIG. 7 is a view illustrating an example of a movement distance between objects in a portable apparatus according to an embodiment of the present disclosure.

Referring to FIG. 7, moving distances 507, 512, 513 and 517 of the plural objects corresponding to the continuous moving distance of the touch 520 are briefly shown.

The controller 110 can calculate a velocity of an individual object by using a size(e.g., the width X the length), of the individual object stored in the storage unit, the layout of the page or application, or a position in the page to which the individual object belongs. The controller 110 can calculate the relative velocity of the object depending on the continuous movement of the touch 520. The controller 110 can calculate the relative velocity between the individual objects by using a vector calculation on the basis of the continuous movement of the touch. Further, the controller 110 may set one of the individual objects 505, 510a, 510b, 510c, and 510d, and 515 as well as the continuous movement of the touch 520 as the basis of the relative velocity. The controller 110 can store the calculated velocity and relative velocity of the individual object in the storage unit.

The plurality of objects 505, 510a, 510b, 510c, and 510d, and 515 has a moving distance to be changed according to a length(e.g., a length of the object when the continuous movement of the touch 520 is performed in the upward or downward direction), and a width of the object when the continuous movement of the touch 520, of the object corresponding to the continuous moving distance of the touch 520.

The plurality of objects 505, 510a, 510b, 510c, and 510d, and 515 has an upward or downward moving distance to be changed according to a length of the page 500(e.g., a vertical length of the page when the continuous movement of the touch is performed in an upward or downward direction), and a horizontal length of the page when the continuous movement of the touch is performed in a left or right direction, corresponding to the continuous moving distance of the touch 520.

Further, the plurality of objects 505, 510a, 510b, 510c, and 510d, and 515 has an upward or downward moving distance to be changed according to a combination of the length of the object(e.g., a length of the object or a width of the object), and a length of the page 500, (e.g., a vertical length or a horizontal length), which correspond to the continuous moving direction of the touch 520. For example, when one object has a length longer than another object, one object can be rapidly moved.

As one object has a length shorter than the vertical length of the page 500, the object can be more slowly moved. For example, when the page has the vertical length of 300mm, one object has the length of 50mm, and another object has the length of 100mm, another object having the length of 100mm can be rapidly moved rather than one object having the length of 50mm. For example, when one object has the width longer than that of another object, one object can be rapidly moved.

As one object has the width shorter than the horizontal width of the page 500, one object can be slowly moved. For example, when the page has the horizontal width of 400 mm, one object has the length of 150 mm, and another object has the length of 300 mm, another object having the length of 300 mm can be rapidly moved rather than one object having the length of 150 mm.

The length of one object may include the lengths of the objects in a group generated by grouping the plurality of objects. The width of one object may include the widths of the objects in a group generated by grouping the plurality of objects.

The text object 505a has a moving distance 507 shorter than a moving distance 512 of the image objects 510a, 510b, 510c and 510d and a moving distance 517 of the video object 515. The object having the shorter moving distance can be slowly moved rather than the object having the longer moving distance. For example, the text object 505a can be slowly moved rather than the image objects 510a, 510b, 510c and 510d, and the video object 515.

Further, the controller 110 may calculate the velocity of each object by using the moving distances 507, 512, 513 and 517 of the individual objects. The controller 110 can calculate the velocity of the individual object by dividing the moving distance 507, 512, 513, or 517 of each object by time. Further, the controller 110 can calculate the relative velocity of the individual object by using a vector calculation which has a size and a direction, on the basis of the continuous movement of the touch 520. The objects respectively may have a different relative velocity which is calculated on the basis of the continuous movement of the touch 520. The controller 110 can distinguishably scroll each object in the page 500 using a difference of the relative velocity of each object. Although the background 510e has a longer length in comparison with the other objects 505, 510 and 515, the background 510e can be slowly moved.

The individual object has the relative velocity to be changed as the moving distance of the individual object is changed according to the position of the object in the page. For example, one object (not shown) positioned at an upper portion of the page may have a relative velocity different from that of another object (not shown) positioned at a lower portion, (e.g., a position of the text object 505b of the page and in an identical line).

When one object does not overlap another object, the relative velocity of one object on the basis of the continuous movement of the touch is not changed but constantly held. Further, when one object overlaps another object, the relative velocity of one object can be changed on the basis of the continuous movement of the touch. For example, when one object approaches another object to be overlapped and temporarily stops, one object which moves again after temporarily stopping may have a relative velocity which is different from that before temporarily stopping. One object which moves again after temporarily stopping may have a relative velocity substantially identical to that of another object to be overlapped (e.g., the object may have a relative velocity more than 95% of a relative velocity of another object).

The objects 510a, 510b, 510c, 510d and 505b which belong to the first object group 502a may have a relative velocity different from that of an object(e.g., the video object 515), which does not belong to the object group. Further, the objects 510a, 510b, 510c, 510d, and 505b which belong to one group(e.g., the first object group 502a), of the object groups 502a, 502b, 502c, 502d and 502e have the identical relative velocity.

Referring to FIG. 6C again, the controller 110 can change the page 500 to a succeeding another page (not shown) in correspondence to the continuous movement of the touch 520, shown in the mini map 501 of FIG. 6C. Referring to FIG. 7, the moving distances 507, 512, 513 and 517 of the plural objects 505, 510a, 510b, 510c, and 510d, and 515 are described on the basis of the continuous moving distance 524 of the touch in the page 500. However, the moving distance of one object will be described on the basis of the continuous movement 524 of the touch in the page 500.

At operation S405, the controller 110 displays the plural objects at a changed relative velocity in response to the continuous movement of the touch 520 when one object overlaps another object.

Thereafter, the displaying of the objects in the portable apparatus 100 is finished.

Returning to operation S404, when the controller 110 determines that at least one object does not overlap another object, the controller 110proceeds to operation S406.

At operation S406, the plurality of objects moving at the relative velocity is displayed.

Referring to FIG. 6D, the controller 110 displays the plurality of objects moving at the relative velocity in response to the continuous movement of the touch 520. According to various embodiments of the present disclosure, the plurality of objects in the page 500 of FIG. 6D is distinguished from some objects of FIGS. 6A, 6B and 6C. For example, the page 500 of FIG. 6D has no text object 505a in the title 500a, and can display the text object 505c having a width narrower than the text object 505b of the second content 500c. Further, because the page of FIG. 6D has no text objects 505a and 505b in comparison with that of FIGS. 6A, 6B, and 6C, the video object 515 can be scrolled without overlapping. Further, when the page includes one object (not shown), the controller 110 displays one object moving at the relative velocity, in response to the continuous movement of the touch.

The controller 110 can scroll the video object along with the plurality of objects 505c, 510a, 510b, 510c and 510d, in response to the continuous movement, for example the continuous movement of the touch from the initial touch position 520a to the final touch position 523a, of the touch 520. The controller 110 can scroll the video object 515 in an upward direction more slowly than the plural objects 505c, 510a, 510b, 510c and 510d, in response to the continuous movement of the touch 520.

The controller 110 can group the plurality of objects 505c, 510a, 510b, 510c and 510d having the substantially identical relative velocity, and constitute a fourth object group 502d.

When the continuous movement of the touch 520 passes through a second intermediate touch position 522a, the controller 110 can scroll the video object 515 along the fourth object group 502d near the video object 515 and temporarily stop the scrolling. The controller 110 can temporarily stop the scrolling of the video object 515 within a distance(e.g., 3 mm), determined on the basis of a base line of the text object 505c. A distance between the text object 505c and the video object 515 of which the scrolling is temporarily stopped may be changed according to the layout of the page.

The controller 110 can scroll the video object 515, which is temporarily stopped, at the relative velocity substantially identical to that of the fourth object group 502d (e.g., the video object 515 may be stopped at a relative velocity that is more than 95% of a relative velocity of another object),. The controller 110 can change the relative velocity of the video object 515 which is scrolled in response to the continuous movement of the touch 520, to correspond to the relative velocity of the fourth object group 502d. The controller 110 can change the relative velocity of the video object 515 to depend on the relative velocity of the fourth object group 502d.

The controller 110 may group the video object 515 and the fourth object group 505d which have the substantially identical velocity so as to constitute the fifth object group 502e.

The controller 110 can scroll the plurality of objects 505, 510a, 510b, 510c and 510d, and 515 in the page 500 at a different relative velocity until the continuous movement of the touch 520 arrives at the final touch position 523a. When the continuous movement of the touch 520 arrives at the final touch position 523a and stops, the controller 110 stops the scrolling of the plural objects 505, 510a, 510b, 510c and 510d, and 515 in the page. Further, the controller 110 can scroll the object groups 502d and 502e until the continuous movement of the touch 520 arrives at the final touch position 523a.

When the continuous movement of the touch 520 passes through the final touch position 523a in the page and proceeds to a boundary of another page(e.g., a mini map 501), the controller 110 can display a part of a page succeeding the page 500 on the touch screen 190.

The controller 110 provides a user with a feedback responding to the display of the succeeding page (not shown). The provided feedback is substantially identical to the feedback responding to the detection of the continuous movement of the touch 520, and accordingly the description of the feedback will be omitted.

Referring to the mini map 501 of FIG. 6D, the controller 110 can change the page 500 to a succeeding page in correspondence to the continuous moving direction of the touch 520.

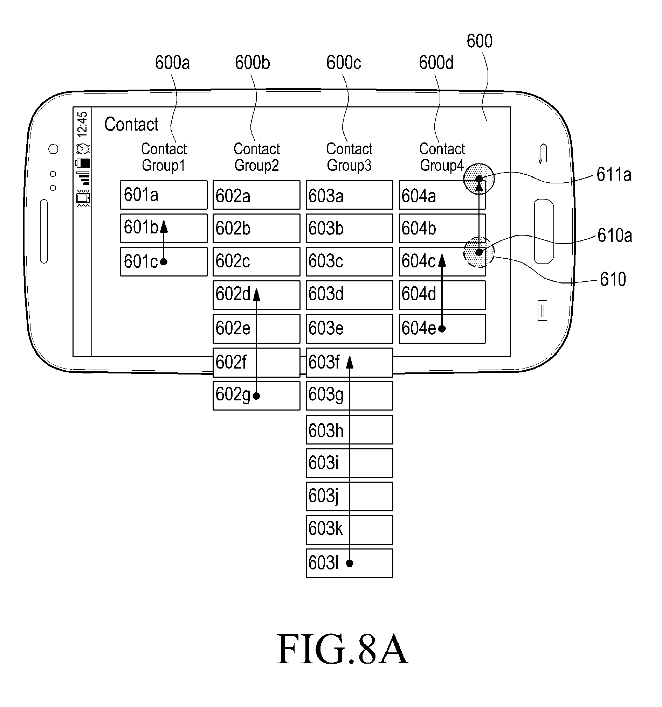

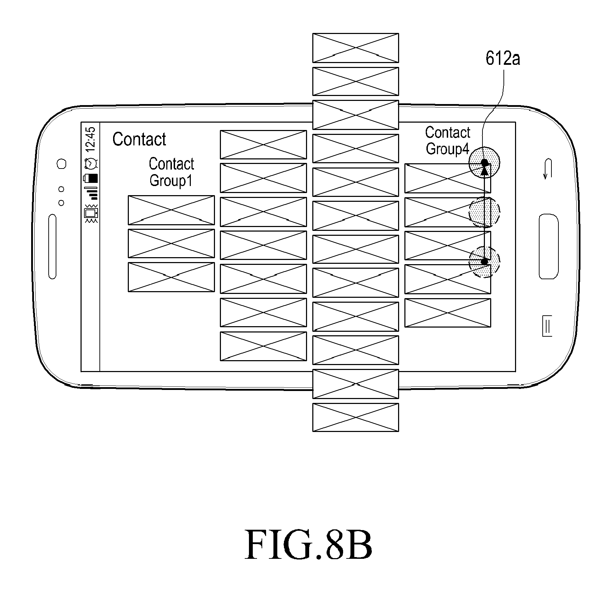

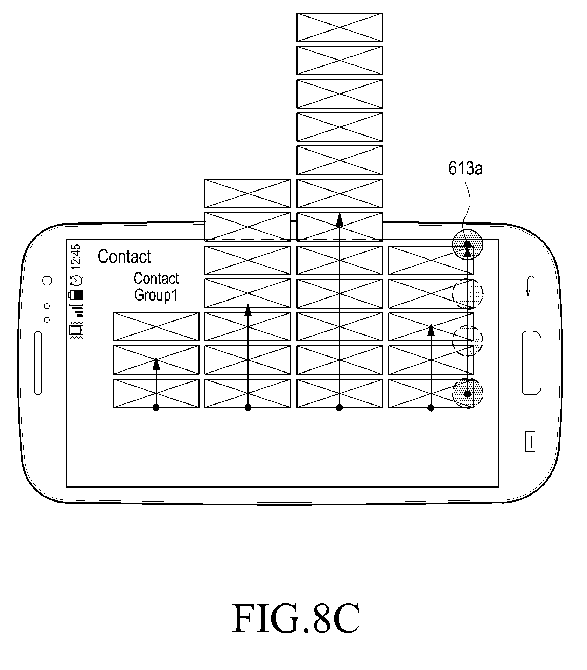

FIGS. 8A, 8B, and 8C are views illustrating an example of a method of displaying an object in a portable apparatus according to an embodiment of the present disclosure.

Referring to FIGS. 8A, 8B,and 8C, when a short-cut icon (not shown) corresponding to a contact address application (not shown) is selected by an input of a user on the touch screen 190, the controller 110 displays a contact address 600 including the plurality of objects. The contact address 600 includes a plurality of contact address groups 600a, 600b, 600c and 600d. For example, the contact address groups can be classified into groups of family, friends, school, company, and/or the like. Further, a layout of the contact address 600 may include a first contact address group 600a, a second contact address group 600b, a third contact address group 600c, and a fourth contact address group 600d.

The contact address group 600a includes at least one contact address 601a, 601b, or 601c. The other contact address groups 600b, 600c and 600d also include at least one contact address. For example, contact address group may include at least one contact address 602a, 602b, 602c, 602e, 602d, 602e, 602f, or 602g. As another example, contact address group 600c may include at least one contact address 603a, 603b, 603c, 603d, 603e, 603f, 603g, 603h, 603i, 603j, 603k, or 6031. As another example, contact address group 600d may include at least one contact address 604a, 604b, 604c, 604d, or 604e. It will be easily appreciated by a person skilled in the art that the contact address 600 may be added, excluded and changed according to the layout and the plural objects constituting the contact address 600.

The controller 110 can scroll the plurality of contact address groups 600a, 600b, 600c and 600d at a different relative velocity in correspondence to the continuous movement(e.g., the continuous movement from the initial touch position 610a to the final touch position 613a through the first and second intermediate touch positions 611a and 612a), of the touch 610. Referring to FIG. 8B, the third contact address group 600c can be rapidly scrolled rather than the other contact address groups 600a, 600b and 600d.

In a case of the contact address 600, because contact addresses belonging to the contact address group do not overlap one another, the controller 110 proceeds to operations S401, 402, 403 and 406 of FIG. 4. A method of displaying an object of the contact address 600 is substantially identical to the operations S401, 402, 403 and 406 of FIG. 4, and the duplicate description of the method will be omitted.

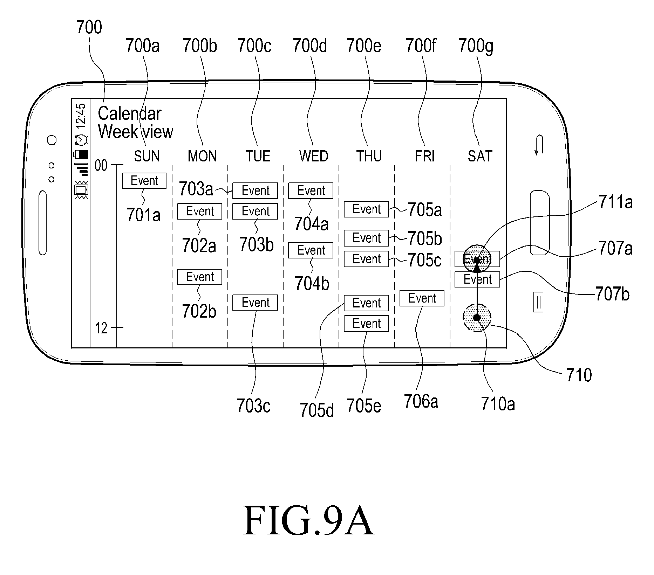

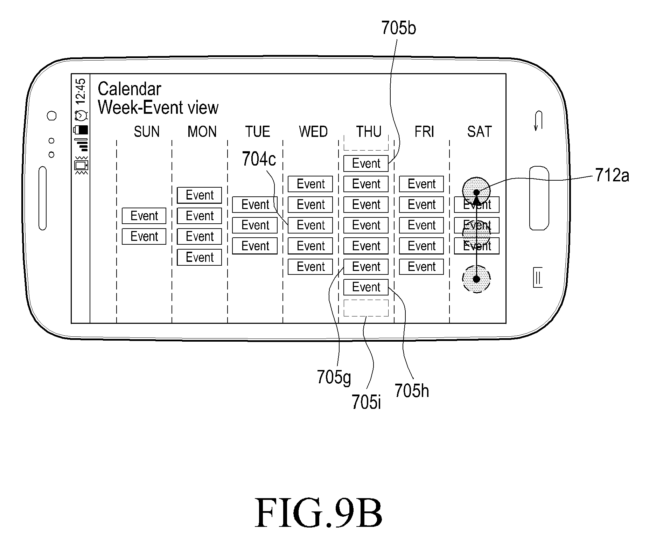

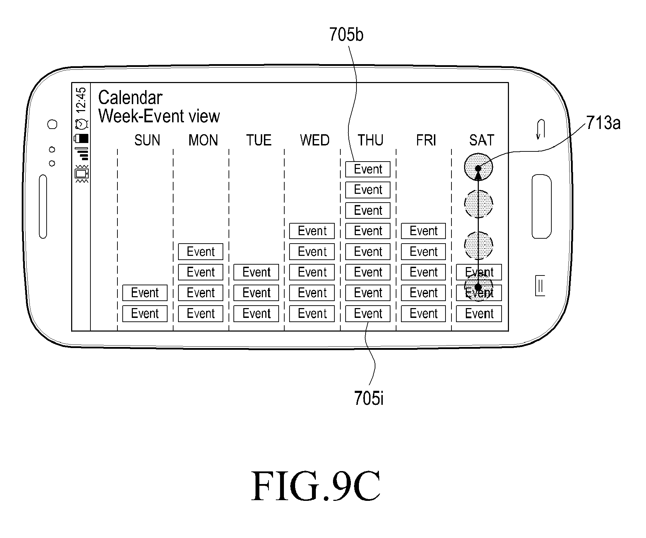

FIGS. 9A, 9B, and 9C are views illustrating an example of a method of displaying an object in a portable apparatus according to an embodiment of the present disclosure.

Referring to FIGS. 9A, 9B,and 9C, when a short-cut icon (not shown) corresponding to a schedule application is selected by an input of a user on the touch screen 190, the controller 110 displays a schedule 700 including a plurality of objects. The schedule 700 includes plural groups of a day of the week 700a, 700b, 700c, 700d, 700e, 700f and 700g. The schedule 700 may change a starting day of the week from the Sunday to the Monday. A layout of the schedule 700 includes Sunday 700a, Monday 700b, Tuesday 700c, Wednesday 700d, Thursday 700e, Friday 700f, and Saturday 700g. For example, a group of Tuesday 700c includes a plurality of events 703a, 703b and 703c. The other groups of a day of the week 700a, 700b, 700d, 700e, 700f and 700g also include at least one contact address. For example, a group of Sunday 700a includes an event 701a. As another example, a group of Monday 700b includes a plurality of events 702a and 702b. As another example, a group of Wednesday 700d includes a plurality of events 704a and 704b. As another example, a group of Thursday 700e includes a plurality of events 705a, 705b, 705c, 705d, and 705e. As another example, a group of Friday 700f includes a plurality of events 700f includes an event 706a. As another example, a group of Saturday 700g includes a plurality of events 707a and 707b. It will be easily appreciated by a person skilled in the art that the schedule 700 may be added, deleted, and changed according to the plurality of objects and the layout constituting the schedule 700.

The controller 110 can scroll the plural groups 700a, 700b, 700c, 700d, 700e, 700f and 700g of the day of the week at a different relative velocity in correspondence to the continuous movement (e.g., the continuous movement from the initial touch position 710a to the final touch position 713a through the first and second intermediate touch positions 711a and 712a), of the touch 710. Referring to FIG. 9B, the group of the day of the week 700e can be rapidly scrolled rather than the other groups of the day of the week 700a, 700b, 700c, 700d, 700f and 700g. An individual event 700a is scrolled out of the touch screen 190 due to the rapid scrolling of the group of the day of the week 700e and not displayed, and the individual events 700h and 700i can be displayed in the touch screen 190.

In a case of the schedule 700, because individual events belonging to the group of the day of the week do not overlap one another, the controller 110 proceeds to operations S401, S402, S403, and S406. The method of displaying the object of the schedule 700 is substantially identical to the operations S401, S402, S403 and S406, and the duplicate description of the method will be omitted.

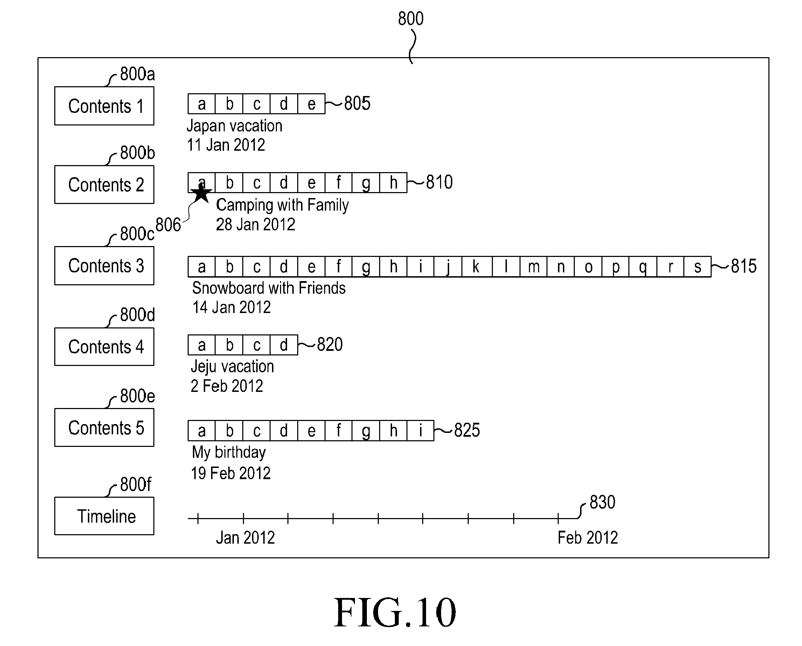

FIG. 10 is a view illustrating an example of an event time line including the object in the portable apparatus according to another embodiment of the present disclosure.

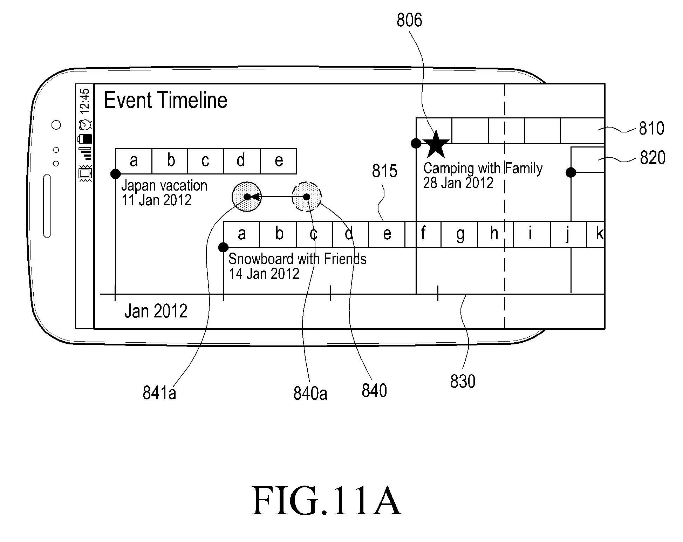

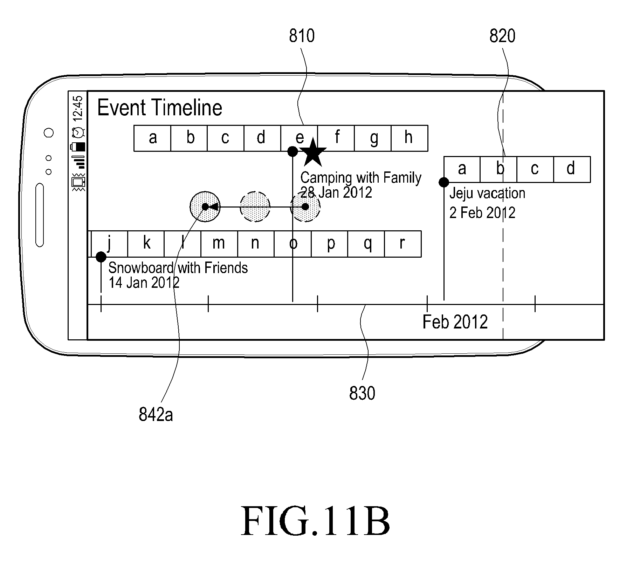

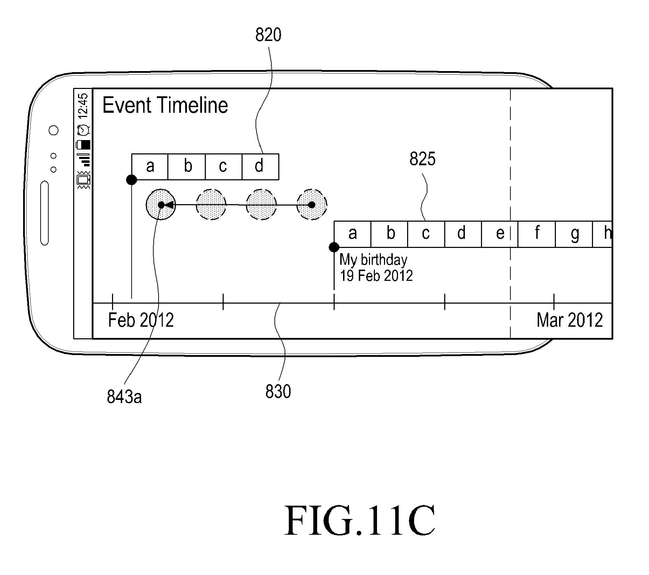

FIGS. 11A, 11B, and 11C are views illustrating an example of a method of displaying an object in a portable apparatus according to an embodiment of the present disclosure.

Referring to FIGS. 10,11A, 11B, and 11C, an event timeline 800 including a plurality of objects is displayed on the touch screen 190. The event timeline 800 may be an execution screen of an application (not shown) displayed on the touch screen 190. The event timeline 800 includes a schedule application, a gallery application, a social network service application, a diary application, and the like. However, according to various embodiments of the present disclosure the event timeline 800 is not limited thereto.

The event timeline 800 may include a plurality of objects. The event timeline 800 is formed with various layouts in correspondence to an arrangement of the objects. For example, the event time line 800 may include a first content group 800a including a plurality of events 805a, 805b, 805c, 805d and 805e corresponding to travel in Japan in January, 2012, a second content group 800b including a plurality of events 810a, 810b, 810c, 810d, 810e, 810f, 810g, and 810h corresponding to family camping 810 in January, 2012, a third content group 800c including a plurality of events 815a to 825s corresponding to snowboarding 815 along with friends in January, 2012, a fourth content group 800d including a plurality of events 820a, 820b, 820c, and 820d corresponding to travel 820 in Jeju in February, 2012, a fifth content group including a plurality of events 825a to 825i corresponding to my birthday 825 in February, 2012, and a timeline 800e including a time scale 830 corresponding to a plurality of events which corresponds to the first content group 800a to fifth content group 800f.

It will be easily appreciated by a person skilled in the art that the event timeline 800 may be added, deleted and changed according to the plurality of objects and the layouts constituting the event timeline 800.

The controller 110 can scroll the plurality of content groups 800a, 800b, 800c, 800d and 800e and the timeline 800f at a different relative velocity, corresponding to the continuous movement of the touch to a left direction(e.g., the continuous movement from the initial touch position 840a to the final touch position 843a through the first and second intermediate touch positions 841a and 842a). Referring to FIG. 11A, a star icon 806 may indicate an event 805a, which has priority, among the individual events 810a to 810h.

Referring to FIG. 11B, the third content group 800c may be rapidly scrolled rather than the other content groups 800a, 800b, 800d and 800e. Some 800a to 800i of the individual events are scrolled out of the event timeline 800 and are not displayed due to the rapid scrolling of the third content group 800c, the residual events 800i to 800r can be scrolled in the timeline 800.

In a case of the event timeline 800, the individual events belonging to the content group do not overlap one another. The controller 110 proceeds to operations S401, S402, S403 and S406. The method of displaying the objects of the event timeline 800 is substantially identical to the operations S401, S402, S403 and S406 of FIG. 4. Accordingly, the duplicate description will be omitted.

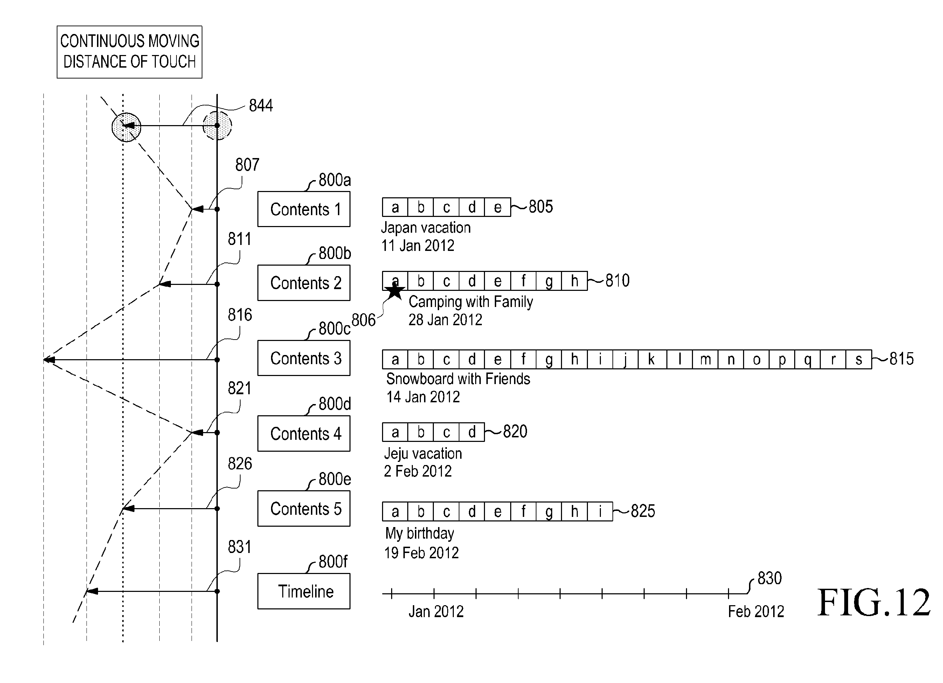

FIG. 12 is a view illustrating an example of a movement distance between objects of a portable apparatus according to an embodiment of the present disclosure.

Referring to FIG. 12, moving distances 807, 811, 816, 821, 826, and 831 of the plural content groups 805,810, 815, 820, and 825, and the timeline 830 corresponding to a continuous moving distance 844 of the touch 840 are briefly shown. The plural objects 805,810, 815, 820, and 825 may have a different moving distance according to a length, for example a width of the content group in a case that the continuous movement of the touch is performed in a left or right direction, of the object corresponding to the continuous moving distance 844 of the touch 840. The first content group 800a has a shorter moving distance in comparison with the moving distance of the residual content groups except for the moving distance 821 of the fourth content group 800d. The content group having the shorter moving distance may be slowly moved rather than the content groups having a longer moving distance. For example, the first content group 800a may be slowly moved in comparison with the residual content groups except for the fourth content group 800d.

An example of the moving distance of the content groups 800a, 800b, 800c, 800d and 800e and the timeline 800f is substantially identical to that of FIG. 7. Accordingly, the duplicate description will be omitted.

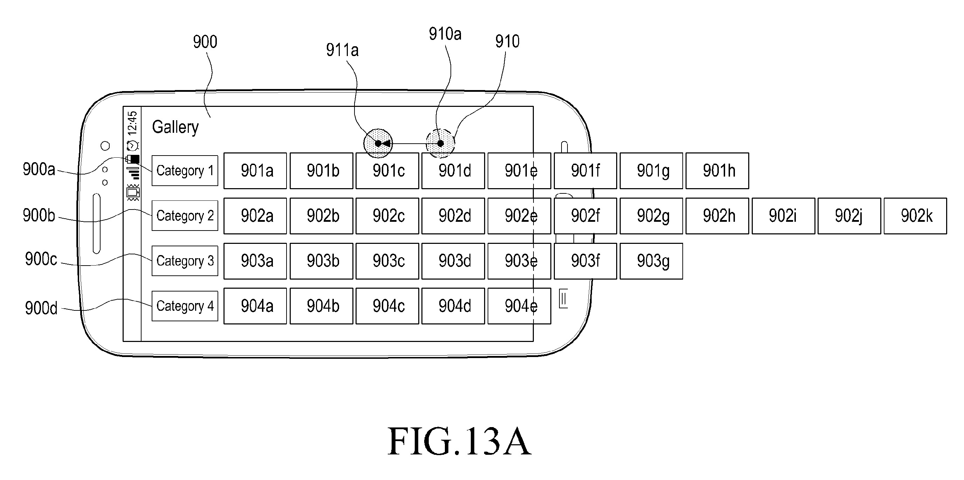

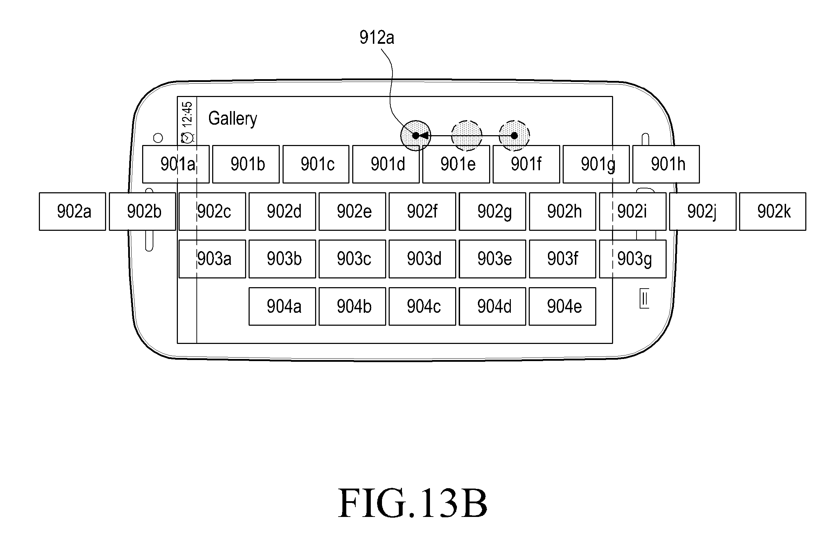

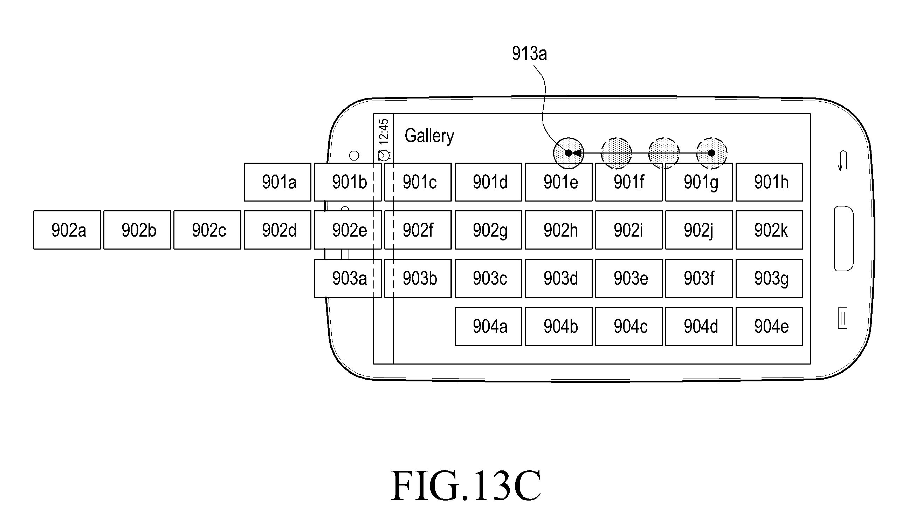

FIGS. 13A, 13B, and 13C are views illustrating an example of a method of displaying an object in a portable apparatus according to an embodiment of the present disclosure.

Referring to FIGS. 13A, 13B, and 13C, when a short-cut icon (not shown) corresponding to a gallery application is selected by an input of a user on the touch screen 190, the controller 110 displays a gallery 900 including a plurality of objects. The gallery 900 includes a plurality of category groups 900a, 900b, 900c and 900d. For example, the category groups can be classified into groups of sports, climbing, restaurants, and travel. Further, the gallery 900 may include only one category group (not shown). The layout of the gallery 900 can include a first category group 900a, a second category group 900b, a third category group 900c, and a fourth category group 900d. The first category group 900a includes a plurality of images 901a to 901h. The other category groups 900b, 900c and 900d may include at least one object (e.g., an individual contact address, an image, and/or the like). For example, the second category group 900b may include objects 902a to 902k. As another example, the third category group 900c may include objects 903a to 903g. As another example, the fourth category group 900d may include objects 904a to 904e. It will be easily appreciated by a person skilled in the art that the gallery 900 may be added, deleted and changed according to the plurality of objects and the layout constituting the gallery 900.

The controller 110 can scroll the plurality of category groups 900a, 900b, 900c and 900d at a different relative velocity in correspondence to the continuous movement of the touch 910(e.g., the continuous movement from the initial touch position 910a to the final touch position 913a through first and second intermediate touch positions 911a and 912a). Referring to FIG. 13B, the second category group 900b can be rapidly scrolled rather than the other category groups 900a, 900c and 900d.

In a case of the gallery 900, the individual contact addresses belonging to the category group do not overlap one another. Accordingly, the controller 110 proceeds to the operations S401, S402, S403 and S406 of FIG. 4. The method of displaying the object of the gallery 900 is substantially identical to the operations S401, S402, S403 and S406. Accordingly, the duplicate description will be omitted.

Referring to FIG. 4 again, at operation S406 of FIG. 4, when the controller 110 displays the plurality of objects moving at the relative velocity in response to the continuous movement of the touch 520, the method of displaying the object on the portable apparatus 100 is finished.

FIGS. 14A and 14B are views illustrating an example of an object display setting according to an embodiment of the present disclosure.

Referring to FIG. 2, a touch input by a user is detected through a short-cut icon 191e relating to an environment setting of a home screen 191 displayed on the touch screen 190. The controller 110 displays an environment setting screen 1000 in response to the touch (not shown) detected through the short-cut icon 191e relating to the environment setting.

Referring to FIG. 14A, items of the displayed environment setting 1000 include a wireless and network 1001, a voice call 1002, a sound 1003, a display 1004, a security 1005, and a setting 1006 of displaying reproduction list. It will be easily appreciated by a person skilled in the art that the setting items displayed in the environment setting 1000 may be added or changed according to the configuration of the portable apparatus 100.

A touch input by a user can be detected the object display setting 1006 of the environment setting screen 1000 displayed on the touch screen 190. The controller 110 displays the object display setting 1006 in response to the touch detected in the object display setting 1006.

Referring to FIG. 14B, the object display setting 1006 may include menus of displaying an object at a relative velocity 1006a in which the object can be displayed at the relative velocity in response to the continuous movement of the touch in a state in which a present setting is on, changing a touch gesture 1006b in which a touch gesture(e.g., a flick, a drag, and/or the like), can be selected and changed in a state in which the present setting is off, setting a touch gesture minimum distance 1006c in which a minimum distance is set as the continuous movement of the touch in a state in which the present setting is 10 mm, selecting a feedback 1006d in which at least one of a visual feedback, an auditory feedback and a tactile feedback is selected in response to the continuous movement of the touch in a state in which the present setting is on, and setting a feedback supplying time 1006e in which a time when a feedback is provided to a user is set in a state in which the present setting is 500 msec.

Further, it will be appreciated by a person skilled in the art that a reproduction list display setting 1006 can be selected and/or changed in the environment setting (not shown) displayed by selecting a menu button 161b in an application which can display an object at a relative velocity in response to the continuous movement of the touch although the reproduction display setting 1006 can be set in the environment setting 1000.

Items of the reproduction list display setting 1006 may be added or deleted according to the configuration of the portable apparatus.

It will be appreciated that the embodiments of the present disclosure may be implemented in the form of hardware, software, or a combination of hardware and software. Any such software may be stored in a volatile or non-volatile storage device such as a ROM, or in a memory such as a RAM, a memory chip, a memory device or a memory integrated circuit, or in a storage medium, such as a Compact Disc (CD), a Digital Versatile Disc (DVD), a magnetic disk or a magnetic tape, which is optically or magnetically recordable and simultaneously, is readable by a machine (for example, a computer), regardless of whether the software can be deleted or rewritten. It will be appreciated that the method for controlling the apparatus for measuring coordinates of input from an input means according to the present disclosure may be implemented by a computer or a portable terminal including a controller and a memory, and that the memory is an example of a non-transitory machine-readable storage medium suitable for storing a program or programs including instructions for implementing the embodiments of the present disclosure. Accordingly, the present disclosure includes a program including codes for implementing an apparatus or a method which is claimed in any claim of this specification, and a storage medium which stores this program and is readable by a machine (a computer or the like). In addition, this program may be electronically conveyed via any medium such as a communication signal transmitted through a wired or wireless connection, and the present disclosure suitably includes equivalents of this program.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying at least one of object of a portable apparatus, the method comprising:
displaying a page including at least one of object on a touch screen;
detecting a continuous movement of a touch in the page; and
displaying the at least one of object moving at a relative velocity, in response to the continuous movement of the touch.

2. The method as claimed in claim 1, wherein the continuous movement of the touch corresponds to the page being substantially scrolled in an upward, downward, left or right direction on the basis of a detected position of the touch.

3. The method as claimed in claim 1, wherein, when the continuous movement of the detected touch is performed in an upward or downward direction, the displaying of the at least one of object comprises displaying a first object of the at least one of object that has a relative velocity which is determined in correspondence to one of a vertical length of the first object and a vertical length of the page.

4. The method as claimed in claim 1, wherein, when the continuous movement of the detected touch is performed in an upward or downward direction, the displaying of the at least one of object comprises displaying a first object of the at least one of object that is moved slowly relative to another object, and
wherein the other object has a vertical length that is longer than a vertical length of the first object.

5. The method as claimed in claim 1, wherein, when the continuous movement of the detected touch is performed in a left or right direction, the displaying of the at least one of object comprises displaying a second object of the at least one of object so as to have a relative velocity which is determined in correspondence to one of a vertical length of the second object and a horizontal length of the page.

6. The method as claimed in claim 1, wherein, the continuous movement of the detected touch is performed in a left or right direction, the displaying of the at least one of object comprises displaying a second object of the at least one of object that is moved relative to another object, and
wherein the other object has a horizontal length that is longer than a horizontal length of the second object.

7. The method as claimed in claim 1, wherein relative velocities of the at least one of object are determined in correspondence to positions of the at least one of object arranged in the page.

8. The method as claimed in claim 1, wherein object group which are respectively generated by grouping the at least one of object have an identical relative velocity.

9. The method as claimed in claim 1, wherein the displaying of the at least one of object comprises determining whether a third object which moves at a relative velocity, among the objects overlaps a fourth object which moves at a relative velocity and which neighbors the third object.

10. The method as claimed in claim 9, wherein, when the third object gradually approaches the fourth object to overlap and stops, the third object has the relative velocity substantially identical to the relative velocity of the fourth object.

11. The method as claimed in claim 1, wherein a feedback is provided when the page is changed to another page succeeding to the page in correspondence to the continuous movement of the touch.

12. A portable apparatus comprising:
a touch screen configured to display a page including at least one object; and
a controller configured to control the touch screen, wherein the controller detects a touch on a page displayed on the touch screen and enables the touch screen to display the at least one object moving a relative velocity in correspondence to a continuous movement of the detected touch.

13. The portable apparatus as claimed in claim 12, wherein the controller calculates the relative velocity of the at least one object, and displays at least one object moving the calculated relative velocity on a basis of a continuous moving distance of the touch.

14. The portable apparatus as claimed in claim 12, wherein, when a first object approaches a second object to overlap and temporarily stops, the controller controls the first object to have a relative velocity identical to the relative velocity of the second object.

15. The portable apparatus as claimed in claim 12, wherein, when a first object approaches a second object to overlap and temporarily stops, the controller controls the first object to have a relative velocity depending on the relative velocity of the second object.
